# EUROPEAN PATENT APPLICATION

(11) **EP 1 881 705 A1**
(43) Date of publication of application: **23.01.2008**
(21) Application number: 05788398.5
(22) Date of filing: 27.09.2005
(51) Int. Cl.: H04N 7/173, G06F 13/00

(54) **DISPLAY DESCRIPTION FORMAT PROVIDING DEVICE, CONTROL METHOD THEREOF, COMMUNICATION NETWORK SYSTEM, DISPLAY CONTROL DEVICE, CONTROL METHOD THEREOF, DISPLAY SYSTEM, DISPLAY DESCRIPTION FORMAT PROVIDING DEVICE CONTROL PROGRAM, DISPLAY CONTROL DEVICE CONTROL PROGRAM, AND RECORDING MEDIUM CONTAINING THE**

(30) Priority: 19.04.2005 JP 2005121739; 13.09.2005 JP 2005265931
(71) Applicant: Sharp Kabushiki Kaisha, Osaka-shi, Osaka 545-8522 (JP)
(72) Inventor: HIRATA, Masafumi, Tokyo 133-0052 (JP); NITTA, Soichi, Chiba 275-0016 (JP); HAGAWA, Toshihide, Chiba 266-0011 (JP)
(74) Representative: Brown, Kenneth Richard
(86) International application number: PCT/JP2005/017743
(87) International publication number: WO 2006/114905

(57) **Abstract**

A display template server (11) supplies, to an information communications terminal (12) via a communications network (13), a display template for displaying a plurality of contents on the information communications terminal (12). The server (11) includes (i) a template storage section (23) that stores original templates each including display area specifying information that specifies a plurality of display areas and (ii) a command storage section (24) that stores change instruction information instructing a change in the display areas. Receiving content information, the server (11) selects, from the template storage section (23), an original template corresponding to the received content information. The server (11) synthesizes the original template with the received content information, and further synthesizes the template with predetermined change instruction information acquired from the command storage section (24). As a result, the display template is generated.

## Description

### TECHNICAL FIELD

The present invention relates to a display description format providing device that provides, to an information communications terminal, a display description format for displaying contents, a method of controlling the device, a communications network system, a display control device for controlling a display device based on the display description format, a method of controlling the device, a display system, a program for controlling the device, a program for controlling the display control device, and a storage medium for storing the program. The invention particularly relates to a display template that is a kind of description formats defining, from the server side, a display layout of contents on the information communications terminal.

### BACKGROUND ART

There are conventional servers that grasp the display capability (e.g. resolution and supported compression methods) of a terminal, convert the format of a content in line with the display capability, and provide the converted content to the terminal. For example, in a case where the terminal does not support JPEG (Joint Photographic Experts Group) images, the server converts a JPEG image into a PNG (Portable Network Graphics) image and sends the image to the terminal.

Meanwhile, there is a known mobile phone with two screens, in which a particular content is displayed on a predetermined screen (see, for instance, Patent Document 2; Japanese Laid-Open Patent Application No. 2005-080020 (published on March 24, 2005)). There is also a known mobile phone in which a particular content is displayed on a particular area of one screen.

Moreover, there is a known mobile phone that supports terrestrial digital television broadcasting for mobile terminals (hereinafter, such broadcasting will be referred to as one-segment broadcasting). Such a mobile phone displays television pictures in a predetermined area and also displays, in another predetermined area, pictures reproduced from the data described in BML (Broadcast Markup Language).

The following Patent Document 1 (Japanese Laid-Open Patent Application No. 2003-319097 (published on November 7, 2003)) discloses a two-screen-cooperated image delivery system and device. In the system and device, while a mobile terminal is connected to a large-screen display device, another service can be provided to the monitor of the mobile terminal. To realize this, the system and device have such means that supplies two types of media data, which are multiplexed to a single set of data, to the mobile terminal, and outputs those types data to two display devices, respectively. The system and device also provide means that supplies two types of cooperated media data to different terminals, and displays a service screen in cooperation.

### DISCLOSURE OF INVENTION

To send display contents to a terminal, servers and broadcasting stations providing display contents conventionally integrate plural display contents into a single content. In such a case, since the servers and broadcasting stations determine the display layout of the plural display contents, the display on the terminal corresponds to the display layout determined by the servers and broadcasting stations. On the terminal side, however, it is difficult to change the display layout of each display content before the integration. It is therefore difficult to change the display layout of the display contents in line with the preference of the user of the terminal.

Meanwhile, as described in Patent Document 1, the servers and broadcasting stations may multiplex plural display contents and send them to a terminal. In such a case, since the multiplexed display contents are demultiplexed by the terminal and displayed thereon, the user of the terminal have freedom to change the display layout of the display contents. It is therefore difficult in this case to display the display contents in line with the display layout desirable for the servers and the broadcasting stations.

The present invention was done in consideration of the problem above. The objective of the present invention is to provide, for example, a display description format providing device that allows both the service providing side and the service receiving side to change the display layout of a plurality of contents.

To achieve the above-described objective, a display description format providing device of the present invention is characterized by providing, to the information communications terminal, a display description format for displaying a plurality of contents on the information communications terminal, the display description format including: display area information for specifying a plurality of display areas; change instruction information for making a change in the display areas; and content instruction information for determining which content is displayed on each of the display areas.

Also, to achieve the above-described objective, a display description format providing device of the present invention is characterized by (i) generating a display description format for displaying a plurality of contents on an information communications terminal, and (ii) supplying the generated display description format to the information communications terminal, the display description format including: display area information for specifying a plurality of display areas; change instruction information for making a change in the display areas; and content instruction information for determining which content is displayed on each of the display areas.

According to the arrangement above, the information communications terminal specifies the display areas based on the display area information and the content instruction information included in the display description format acquired from the display description format providing device. The information communications terminal then displays the determined contents on the specified display areas, respectively. Also, the information communications terminal changes the display areas of the contents, in accordance with the change instruction information included in the display description format.

With this, for instance, the user can change the display layout of the contents in a case where the change instruction information indicates that user's predetermined input triggers a change in the display areas. Also, in a case where the change instruction information indicates that the reception of a predetermined change instruction signal from an external device such as the display description format providing device triggers a change in the display areas, the display description format providing device can change the layout of the contents. Furthermore, in a case where the change instruction information indicates that the reception of a predetermined signal included in a content triggers a change in the layout of the contents, the display layout can be changed in line with the contents.

On this account, the display description format providing device of the present invention allows both the service providing side, i.e. the display description format providing device or a content providing server, and the service receiving side, i.e. the information communications terminal, to change the display layout of the contents displayed on the information communications terminal.

The display description format may include contents per se, or may store positional information of contents such as a network address, URI (Uniform Resource Identifiers), and channel information of television broadcasting.

The supply of the display description format from the display description format providing device to the information communications terminal may be carried out via a communications network, by a recording medium such as a flash memory and an optical disc, or via broadcasting.

The change instruction information may instruct each of at least two of the display areas to change. In this case, it is possible to instruct each of the display areas to change differently.

The change instruction information may instruct at least one of the display areas to change at least twice. With this, it is possible to instruct the display areas to, for instance, change in different manners, by different triggers.

Examples of the change instruction information include: information that instructs at least one of the display areas to move; information that instructs at least one of the display areas to move to another information communications terminal; information that instructs two of the display areas to be switched with one another; information that instructs at least one of the display areas to appear; information that instructs at least one of the display areas to disappear; and a combination of these sets of information.

If the change instruction information instructs at least one of the display areas to move, the positions of the respective contents are changed. Also, if the change instruction information instructs at least one of the display areas to move to another information communications terminal, for instance, a content having a large display size is displayed in a detailed manner, by moving that content to a wide display screen of said another communications terminal.

If the change instruction information instructs two of the display areas to be switched with one another, for instance, in such a case where one display area is larger in terms of display size than the other display area, it is possible to switch a content to be displayed in a detailed manner. Also, if the change instruction information instructs at least one of the display areas to appear, it is possible to additionally display a suitable content at a suitable time. If the change instruction information instructs at least one of the display areas to disappear, it is possible to delete an unnecessary content from the display screen, thereby making it possible to prevent the display of the other contents from being restrained.

The change instruction information preferably includes at least one set of trigger information that triggers an instruction of making change in the display areas. The trigger information instructs to make a change in the display areas in at least one of cases where: the information communications terminal receives a predetermined input; the information communications terminal receives a predetermined change instruction signal; and a predetermined change instruction signal included in the content is acquired.

Another example of the trigger information is as follows: a change in the display areas is instructed in response to the operation of predetermined application software on the information communications terminal. Examples of the application software include mail software, alarm software, and scheduler. In the arrangement above, the display layout of the contents displayed on the information communications terminal can be changed both from the service providing side and the service receiving side, as compared to a conventional display arrangement where popup display is performed in accordance with the operation of application software.

The predetermined change instruction signal may be supplied from the display description format providing device to the information communications terminal, or may be supplied from another device to the information communications terminal via another communications network. Also, the following arrangement may be implemented: the change instruction signal is supplied, as an e-mail, to the information communications terminal, and a change of the display layout is triggered by the operation of resident mail software.

In addition to the above, a communications network system, in which the above-described display description format providing device is connected to a plurality of communications terminals via the communications network, is capable of achieving the aforesaid effects.

In consideration of a case where the user of the information communications terminal does not desire to change the display layout in line with a change instruction signal supplied from the outside, the information communications terminal preferably has a function of ignoring the change instruction information.

It is also preferable that, for example, one of the contents is visual information of terrestrial digital television broadcasting for mobile objects, and at least one of the information communications terminals is a mobile object capable of displaying pictures of the terrestrial digital television broadcasting for mobile objects. Also, the information communications terminal may be a display control device for controlling a display device.

To achieve the above-described objective, a display control device of the present invention is characterized by comprising: acquisition means for acquiring a display description format that is used for displaying a plurality of contents and includes display area information that specifies a plurality of display areas, change instruction information that instructs to make a change in the display areas, and content instruction information that determines which content is displayed on each of the display areas; and display control means for controlling a display device based on the acquired display description format.

To achieve the above-described objective, a display control device of the present invention is characterized by comprising: acquisition means for acquiring display area information that specifies a plurality of display areas, change instruction information that instructs to make a change in the display areas, and content instruction information that determines which content is displayed on each of the display areas; generation means for generating a display description format that is used for displaying a plurality of contents and which includes the acquired display areas information, change instruction information, and content instruction information; and display control means for controlling a display device based on the generated display description format.

The display description format or various types of information that the acquisition means acquires may be acquired from the storage means of the display control device, from an external recording medium, or from an external device via a communications cable or a communications network.

According to the arrangement above, the display control device controls the display device based on (i) the display description format that the acquisition means acquired or (ii) the display area information and the content instruction information that are included in the display description format generated by the generation means. As a result, the display areas on the display device are specified, and the determined contents are displayed on the respective specified display areas. Also, the display control device controls the display device in accordance with the change instruction information included in the display description format, so that the display areas of the contents are changed.

With this, for instance, the user can change the display layout of the contents in a case where the change instruction information indicates that user's predetermined input triggers a change in the display areas. Also, in a case where the change instruction information indicates that the reception of a predetermined change instruction signal from an external device triggers a change in the display areas, the display layout of the contents can be changed from the outside. Furthermore, in a case where the change instruction information indicates that the reception of a predetermined signal included in a content triggers a change in the layout of the contents, the display layout can be changed in line with the contents.

On this account, the display control device of the present invention allows both the user side and the content service providing side to change the display layout of the contents displayed on the display device.

Examples of the display control device are a television tuner, STB (Set Top Box), HDD recorder, and DVD recorder.

The aforesaid display control device may further comprise format change means for replacing the display description format with another display description format. According to this arrangement, the display layout can be easily changed by replacing the display description format with another display description format.

In addition to the above, a display system including the above-described display control device and a display device controlled by the display control device is capable of achieving the aforesaid effects. In the display system, the display control device may be integrated with the display device, or the display control device and the display device may be separated from each other. When these devices are separated from each other, communications between the display control device and the display device may be performed by wires or may be wirelessly performed.

A method of controlling a display description format providing device of the present invention is a method of controlling a display description format providing device that generates a display description format for displaying a plurality of contents on an information communications terminal, and supplies the generated display description format to the information communications terminal via a communications network. The display description format providing device includes storage means that stores: original description formats each including display area specifying information for specifying a plurality of display areas; and change instruction information for making a change in the display areas. To achieve the objective above, the method is characterized by comprising the steps of: in response to acquisition of content information from a content provider, selecting one of the original description formats stored in the storage means, the selected original description format corresponding to the acquired content information; and synthesizing the selected original description format with the acquired content information, and further synthesizing, with the format having been synthesized with the content information, predetermined change instruction information acquired from the storage section.

According to the method, when the content information is supplied from the content provider, an original description format corresponding to the supplied content information is selected from the storage means, and the supplied content information is synthesized with the selected original description format. Furthermore, predetermined change instruction information is acquired from the storage means and synthesized with the original description format having been synthesized with the content information. As a result, the display description format is automatically generated and supplied to the information communications terminal.

A method of controlling a display description format providing device is a method of controlling a display description format providing device that supplies, to an information communications terminal via a communications network, a display description format for displaying a plurality of contents on the information communications terminal. The display description format includes: display area information for specifying a plurality of display areas; change instruction information for making a change in the display areas; and content instruction information for determining which content is displayed on each of the display areas. To achieve the above-described objective, the method is characterized by comprising the steps of: sending, to the information communications terminal, the display description format including the change instruction information which determines which content is displayed on each of the display areas when the information communications terminal acquires a predetermined change instruction signal, via the communications network; and sending the change instruction signal to the information communications terminal via the communications network.

According to the method, the display description format includes change instruction information that instructs to make a change in the display areas, when the information communications terminal acquires a predetermined change instruction signal. The change instruction signal is supplied from the display description format providing device to the information communications terminal. This makes it possible to change the display layout of the contents, from the display description format providing device side from which the service is provided.

A method of controlling a display control device of the present invention is a method of controlling a display device in accordance with a display description format for displaying a plurality of contents, the display control device including storage means for storing more than one set of display area information that specifies a plurality of display areas, the method comprising the steps of: selecting one set of display area information from the storage means; generating a display description format that includes the selected display area information, change instruction information that instructs to make a change in the display areas, and content instruction information that determines which content is displayed on each of the display area; and controlling the display device based on the generated display description format.

According to the arrangement above, the display control device selects display area information, and controls the display device in accordance with the display description format including the selected display area information. With this, the user of the display control device can easily change the display layout in a suitable manner, by selecting, among the sets of display area information stored in the storage means, a desirable set of display area information, and making a change thereto.

The steps of the methods of controlling the display description format providing device can be realized on a computer by means of a program for controlling the display description format providing device. Furthermore, the methods of controlling the display control device can be realized on a computer by means of a program for controlling the display control device.

Storing the program for controlling the display description format providing device and/or the program for controlling the display control device in a computer-readable storage medium, it is possible to allow the program to be executed on any computer.

As described above, the display description format providing device of the present invention provides, to the information communications terminal, the display description format including the change instruction information. On this account, it is possible to change the display layout of the contents displayed on the information communications terminal, both from the service providing side and the service receiving side.

Additional objects, features, and strengths of the present invention will be made clear by the description below. Further, the advantages of the present invention will be evident from the following explanation in reference to the drawings.

### BRIEF DESCRIPTION OF DRAWINGS

Fig. 1 is a block diagram showing the outline of a communications network system and the outline of a display template server of the system, which are of an embodiment of the present invention.
Fig. 2 is a block diagram showing the outline of a mobile communications terminal of the communications network system.
Fig. 3 shows that an example of a display template synthesized by a template synthesizing section of the server is illustrated as data described in the XML format.
Fig. 4 illustrates display areas of contents on a display section of the mobile communications terminal, the display areas being determined based on display area data included in the display template.
Fig. 5 is a flowchart illustrating the processing in a template synthesizing section of the server.
Fig. 6 is a flowchart showing the processing in a control section of the mobile communications terminal.
Fig. 7(a) illustrates an example of display before the switching of the display areas of the embodiment.
Fig. 7(b) illustrates an example of display after the switching of the display areas of the embodiment.
Fig. 8 shows an example of a display template synthesized by a template synthesizing section of a display template server in a communications network system of another embodiment of the present invention, the display template being illustrated as data described in the XML format.
Fig. 9 is a flowchart showing the processing in a control section of a mobile communications terminal of the communications network system.
Fig. 10(a) shows an example of display before the move of the display area of the embodiment.
Fig. 10(b) shows an example of display after the move of the display area of the embodiment.
Fig. 11 shows an example of a display template synthesized by a template synthesizing section of a display template server in a communications network system of a further embodiment of the present invention, the display template being illustrated as data described in the XHTML format.
Fig. 12(a) illustrates an example of display before the switching of the display areas of the embodiment.
Fig. 12(b) illustrates an example of display after the switching of the display areas of the embodiment.
Fig. 13 shows an example of a display template synthesized by a template synthesizing section of a display template server in a communications network system of still another embodiment of the present invention, the display template being illustrated as data described in the XML format.
Fig. 14 shows an example of a display template synthesized by a template synthesizing section of a display template server in a communications network system of yet another embodiment of the present invention, the display template being illustrated as data described in the XML format.
Fig. 15(a) shows an example of display before the addition of the display area of the present embodiment.
Fig. 15(b) shows an example of display after the addition of the display area of the present embodiment.
Fig. 16 shows an example of a display template synthesized by a template synthesizing section of a display template server in a communications network system of yet another embodiment of the present invention, the display template being illustrated as data described in the XML format.
Fig. 17 shows an example of a display template synthesized by a template synthesizing section of a display template server in a communications network system of yet another embodiment of the present invention, the display template being illustrated as data described in the XML format.
Fig. 18(a) shows an example of display before the deletion of the display area of the present embodiment.
Fig. 18(b) shows an example of display after the deletion of the display area of the present embodiment.
Fig. 19 shows an example of a display template synthesized by a template synthesizing section of a display template server in a communications network system of yet another embodiment of the present invention, the display template being illustrated as data described in the XML format.
Fig. 20 shows an example of a display template synthesized by a template synthesizing section of a display template server in a communications network system of yet another embodiment of the present invention, the display template being illustrated as data described in the XML format.
Fig. 21 (a) shows an example of display before the addition of the display area of the present embodiment.
Fig. 21 (b) shows an example of display after the addition of the display area in the present embodiment.
Fig. 22 shows an example of a display template synthesized by a template synthesizing section of a display template server in a communications network system of yet another embodiment of the present invention, the display template being illustrated as data described in the XML format.
Fig. 23(a) shows an example of display before the addition of the display area of the present embodiment.
Fig. 23(b) shows an example of display after the addition of the display area of the present embodiment,
Fig. 24 shows an example of a display template synthesized by a template synthesizing section of a display template server in a communications network system of yet another embodiment of the present invention, the display template being illustrated as data described in the XML format.
Fig. 25(a) shows an example of display before the addition of the display area of the present embodiment.
Fig. 25(b) shows an example after the addition of the display area of the present embodiment.
Fig. 26 shows an example of a display template synthesized by a template synthesizing section of a display template server in a communications network system of yet another embodiment of the present invention, the display template being illustrated as data described in the XML format.
Fig. 27 shows an example of how images displayed on the display section of the mobile communications terminal of the communications network system change.
Fig. 28 is a block diagram showing the outline of a communications network system of yet another embodiment of the present invention.
Fig. 29 is a block diagram showing the outline of a communications network system of yet another embodiment of the present invention.
Fig. 30 is a block diagram showing the outline of a mobile communications terminal of a communications network system of yet another embodiment of the present invention.
Fig. 31 is a flowchart showing the processing in the control section of the mobile communications terminal.
Fig. 32 shows an example of how images displayed on the display section of the mobile communications terminal of the communications network system change.

### BEST MODE FOR CARRYING OUT THE INVENTION

### [EMBODIMENT 1]

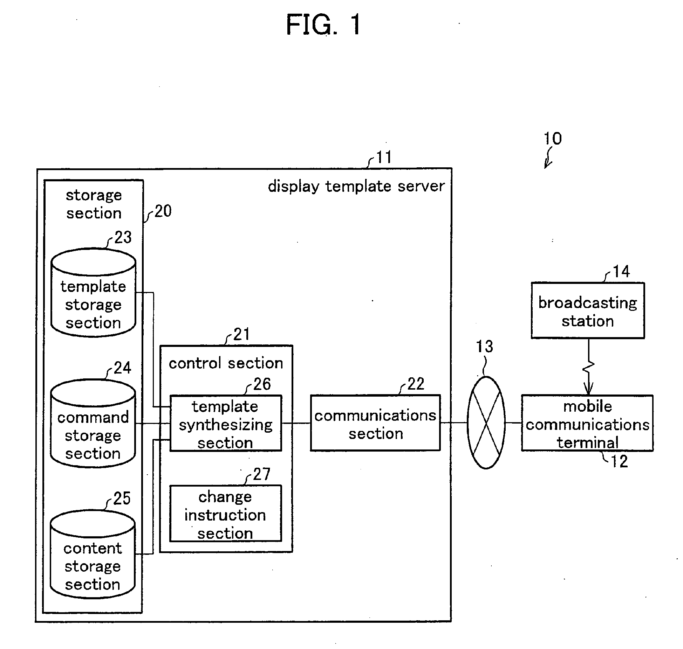

The following will describe an embodiment of the present invention with reference to Figs. 1-7. Fig. 1 illustrates the outline of a communications network system of the present embodiment. As shown in the figure, the communications network system 10 is arranged such that, via a communications network 13, a display template server (display description format providing device) 11 is connected to and capable of communicating with one or more mobile communications terminal (information communications terminal) 12 such as a mobile phone. The mobile communications terminal 12 has a capability of receiving, for instance, television broadcasting waves such as one-segment broadcasting from a broadcasting station 14 and displaying TV pictures. As the communications network 13, it is possible to adopt publicly-known communications networks such as a mobile communications network, a telephone network, the Internet, and a LAN (Local Area Network).

The display template server (hereinafter, it will be simply referred to as server) 11 provides a display template with which contents are displayed on the mobile communications terminal 12. The server 11 consists of a computer. As shown in Fig. 1, the server 11 includes a storage section (storage means) 20, a control section 21, and a communications section 22.

The storage section 20 stores various types of information provided by the server 11. The storage section 20 consists of, for example, a HDD (Hard Disk Drive). Details of the storage section 20 will be given later.

The control section 21 centrally controls various arrangements in regard of the server 11. The functions of the control section 21 are implemented by a CPU executing a program stored in a storage device such as RAM and flash memory. Details of the control section 21 will be given later.

The communications section 22 converts data, which is supplied from the control section 21, into a format suitable for data communications, and then sends the converted signal to the communications network 13. The communications section 22 also converts a signal, which is supplied from the communications network 13, into an original format, and then sends the converted data to the control section 21.

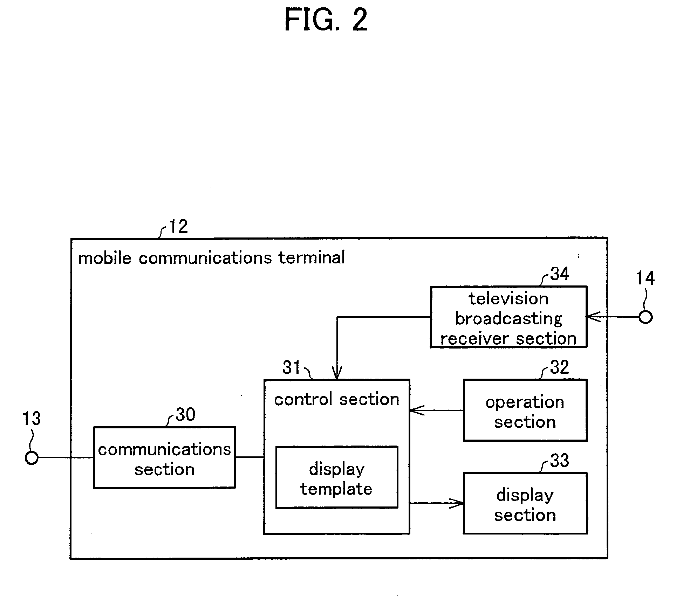

Fig. 2 illustrates the outline of the mobile communications terminal 12. As shown in the figure, the mobile communications terminal 12 includes a communications section 30, a control section (acquisition means, display control means) 31, an operation section 32, a display section 33, and a television broadcasting receiver section 34.

The communications section 30 converts data, which is supplied from the control section 31, into a format suitable for data communications, and then sends the converted signal to the communications network 13. The communications section 30 also converts a signal, which is supplied from the communications network 13, into an original format, and sends the converted data to the control section 31.

The control section 31 centrally controls various arrangements in regard of the mobile communications terminal 12. The functions of the control section 31 are implemented by a CPU executing a program stored in a storage device such as RAM and flash memory. In the present embodiment, the control section 31 controls the display on the display section 33, based on a display template acquired from the server 11 via the communications network 13 and the communications section 30.

The operation section 32 receives instructions from the user. Examples of the operation section 32 include a keyboard, a numeric keypad, and a pointing device. In response to an instruction from the user, the operation section 32 generates an operation signal and sends it to the control section 31.

The display section 33 outputs and displays various types of information, e.g. texts and pictures. Examples of the display section 33 include a LCD (Liquid Crystal Display), EL (Electroluminescence) display, and a PDP (Plasma Display Panel).

The television broadcasting receiver section 34 receives a TV broadcasting electric wave from the broadcasting station 14, converts the received wave into predetermined video data and audio data, and supplies the data to the control section 31. Note that, since the present invention relates to display and output of contents, arrangements concerning audio output are not described.

Now, details of the storage section 20 and the control section 21 of the display template server 11 will be described in reference to Figs. 1, 3, and 4.

As shown in Fig. 1, the storage section 20 includes a template storage section 23, a command storage section 24, and a content storage section 25. In the display screen on the mobile communications terminal 12, the temperature storage section 23 includes various types of original templates including display area information with which one or more display area is specified. The command storage section 24 includes various types of change instruction information instructing the change in the display area. The content storage section 25 includes content instruction information instructing which content is displayed on the display area. The content storage section 25 may include any types of contents provided to the mobile communications terminal 12, e.g. picture data, audio data, and document data.

The content storage section 25 may store contents per se, or may store positional information of contents such as a network address, URL, and channel information of television broadcasting. The content storage section 25 may temporarily store contents supplied from another server.

The control section 21 includes a template synthesizing section 26. The template synthesizing section 26 synthesizes, with an original template acquired from the template storage section 23, the change instruction information acquired from the command storage section 24 and the content instruction information acquired from the content storage section 25. As a display template, the template synthesizing section 26 sends the synthesized template to the mobile communications terminal 12 via the communications section 22 and the communications network 13.

It is noted that the change instruction information of the display template may instruct to make a change in the display areas, in response to the acquisition of a predetermined change instruction signal from the outside. On this account, in a case where the display template server 11 sends the predetermined change instruction signal to the mobile communications terminal 12, as shown in Fig. 1, the control section 21 of the display template server 11 preferably includes a change instruction section 27 that sends the predetermined change instruction signal to the mobile communications terminal 12 via the communications section 22 and the communications network 13.

In the present embodiment, the display template supplied from the server 11 to the mobile communications terminal 12 sets two display areas on the display section 33 of the mobile communications terminal 12, displays different contents on the respective display areas, and in response to the push of a "switching button" by the user of the mobile communications terminal 12, the display template instructs the display section 33 of the mobile communications terminal 12 to switch the display areas and display the contents.

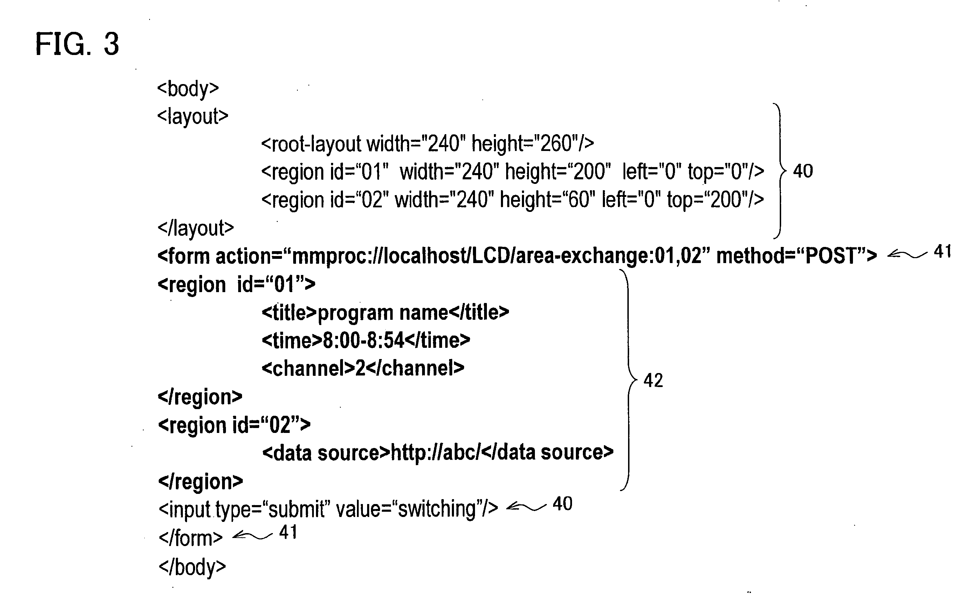

Fig. 3 illustrates an example of the display template synthesized in the template synthesizing section 26. Note that, although the display template in the figure is described in the XML (extensible Markup Language) format, the template may be described in any other description format or a combination of the formats. Examples of the formats include HTML (Hyper Text Markup Language), XHTML (extensible Hyper Text Markup Language), SMIL (Synchronized Multimedia Integration Language), and SVG (Scalable Vector Graphics). Also, the tags in the figure are merely an example, and hence the tags may be described in a different way.

In Fig. 3, the data with the identification number 40 is the display area data (display area information) included in the original template acquired from the template storage section 23. That is to say, the display area data 40 sets an entire display area used in accordance with the display template, and gives an instruction to divide the display area into two display areas. The display area data 40 also gives an instruction to display a selection button for the selection by the user.

To allow the display area data 40 to set a part of or entirety of display area on the display screen of the mobile communications terminal 12, the server 11 preferably recognizes, by means of a known method, the size of the display screen of the mobile communications terminal 12.

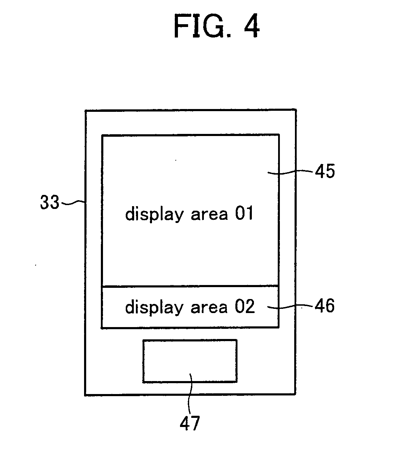

Fig. 4 illustrates the display area of a content that is displayed on the display section 33 of the mobile communications terminal 12. This display area corresponds to the display area data 40 shown in Fig. 3. As shown in Fig. 4, the display screen on the display section 33 is arranged as follows: an area of 240 dots in width and 260 dots in height is set as the entire display area, and the display area thus set is divided into an upper wide display area 45 (display area 01, 240 dots in width and 200 dots in height) and a lower narrow display area 46 (display area 02, 240 dots in width and 60 dots in height). Also, below the display areas 45 and 46, a selection button 47 is provided.

In Fig. 3, the data with the identification number 41 is command data (change instruction information) acquired from the command storage section 24. The command data 41 gives an instruction to switch between the content displayed on the wide display area 45 and the content displayed in the narrow display area 46, which are shown in Fig. 4.

In Fig. 3, the data with the identification number 42 is content instruction data acquired from the content storage section 25. That is, the content instruction data 42 specifies the content displayed on the wide display area 45 and the content shown in the narrow display area 46, which are shown in Fig. 4.

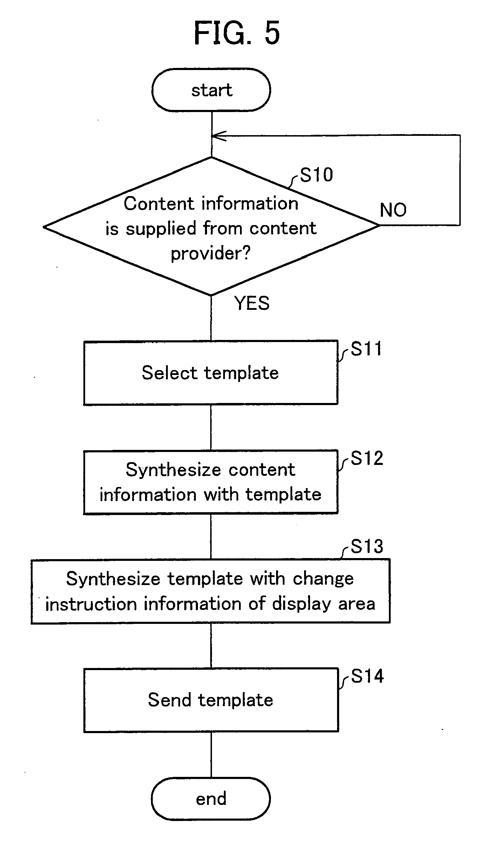

The processing in the above-described communications network system 10 will be described in reference to Figs. 5-7.

Fig. 5 shows the processing in the template synthesizing section 26 of the server 11. As shown in the figure, the template synthesizing section 26 is on standby until a content provider provides content information (Step S10 (hereinafter, Steps will be at times simply referred to as "S", e.g. S10)). The content information thus provided is stored in the content storage section 25.

After the content information is provided in Step S10, an original template corresponding to that content information is selected and fetched from the template storage section 23 (S11). Subsequently, the selected original template is synthesized with the content information thus provided and relating content information which are acquired from the content storage section 25 (S 12). Also, the original template is further synthesized with the change instruction information of the display area, which is set in advance by the content provider and acquired from the command storage section 24 (S13). As a display template, the template thus synthesized is then supplied to the mobile communications terminal 12. Thereafter, the processing in the server 11 finishes.

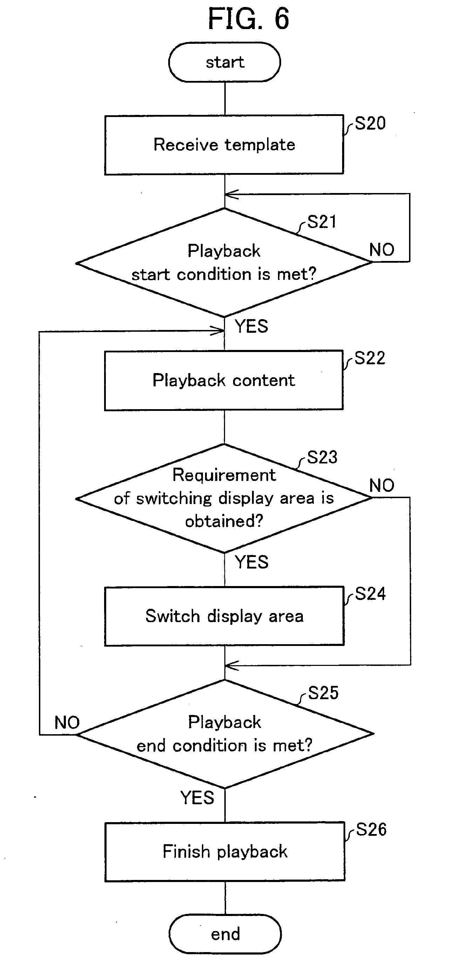

Fig. 6 shows the processing in the control section 31 of the mobile communications terminal 12. As shown in the figure, receiving a display template from the server 11 (S20), the control section 31 is on standby until the playback start condition of the content is met (S21). The playback start condition is included in the display template. More specifically, in a case where a time to start the playback of the content is set, the control section 31 is on standby until the time comes. In a case where priority is given to the user's instruction, the control section 31 is on standby until the user selects the playback button of the operation section 32.

When the playback start condition is met, the control section 31 plays back the contents and display them on the display areas 45 and 46 (shown in Fig. 4) of the display section 33 (S22). Subsequently, the control section 31 judges whether or not a requirement of switching the display areas has been acquired (S23). In the present embodiment, it is judged as to whether or not the user has selected the switching button of the operation section 32. If the requirement of switching has been acquired, the display areas are switched (S24).

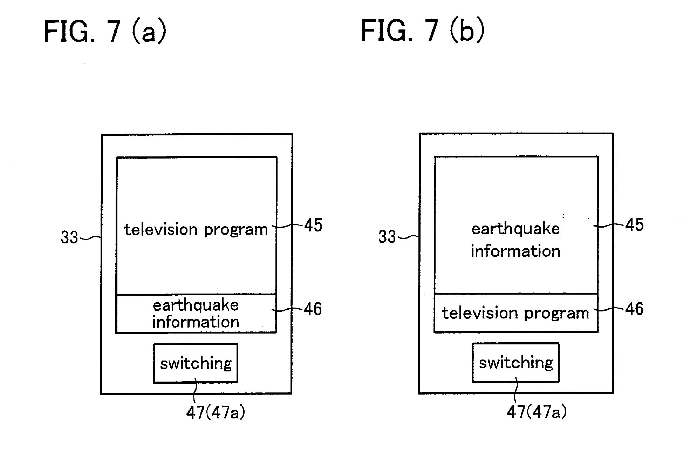

Figs. 7(a) and 7(b) show the display examples before and after the switching of the display areas in S24. Assume that, as shown in Fig. 7(a), before the switching of the display areas, a picture of a television program is displayed on the wide display area 45, while earthquake information is displayed on the narrow display area 46. In this case, as the user selects a switching button 47a in order to view the details of the earthquake information, the earthquake information is displayed on the wide display area 45 and the picture of the television program is displayed on the narrow display area 46, as shown in Fig. 7(b).

It is then judged whether or not the playback end condition of the content is met (S25). More specifically, when the playback end time of the content is set, it is judged as to whether or not the time thus set has come. When priority is given to the user's instruction, it is judged as to whether or not the user has selected the playback end button of the operation section 32.

If the playback end condition is not met (NO in Step S25), the process goes back to the step S22 and repeats the processing above. Meanwhile, if the playback end condition is met (YES in Step S25), the playback of the content finishes (S26). The processing in the mobile communications terminal 12 then finishes.

In this manner, the display template provided from the server 11 of the present embodiment is used and the user of the mobile communications terminal 12 selects the switching button 47a, so that the contents displayed on the display areas 45 and 46 are switched. As a result, the display template allows the user of the mobile communications terminal 12 to change the display layout of the contents. Furthermore, on account of the aforesaid display template, when the user of the mobile communications terminal 12 desires to see the details of the content, the content can be displayed on the display area with a large size. Also, since the user of the mobile communications terminal 12 can easily change the display layout by selecting the switching button 47a, it is possible to provide easy-to-understand services in conformity to the intension of the service provider.

As the information communications terminal, the present embodiment adopts the mobile communications terminal 12. Alternatively, it is possible to adopt a display device supporting communications, display control, and display capabilities, and a display system including a display control device having communications and display control capabilities and a display device having a display capability. Examples of the display control device include a television tuner, STB, HDD recorder, and DVD recorder.

### [Embodiment 2]

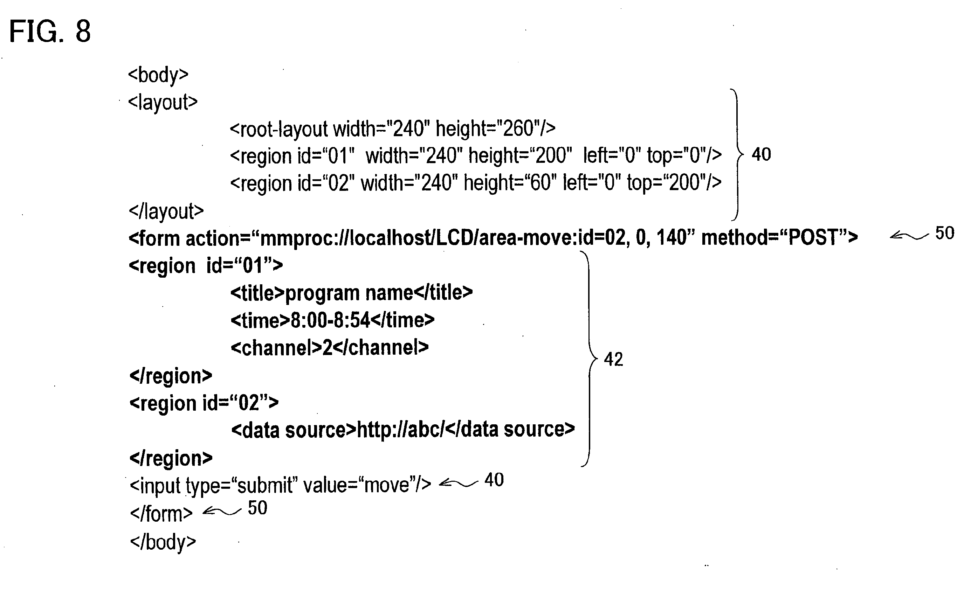

The following will describe another embodiment of the present invention in reference to Figs. 8-10. A communications network system of the present embodiment and the communications network system 10 shown in Figs. 1-7 share the arrangements and processing, except that, in the communications system of the present embodiment, the display areas 45 and 46 move in response to the push of "move" button by the user. By the way, members having the same functions as those described in the embodiment above are given the same numbers, so that the descriptions are omitted for the sake of convenience.

Fig. 8 relates to the present embodiment and shows an example of a display template synthesized in the template synthesizing section 26. The display template shown in the figure is identical with the display template shown in Fig. 3, except that a move button 47b is provided in place of the selection button 47 which is in the display area data 40 and selected by the user, and different command data is acquired from the command storage section 24.

As shown in Fig. 8, command data 50 acquired from the command storage section 24 instructs the wide display area 45 to move downward and the narrow display area 46 to move upward. These areas are shown in Fig. 4. In the present embodiment, the command data 50 specifies absolute coordinates as the target of the move. Alternatively, relative coordinates may be specified.

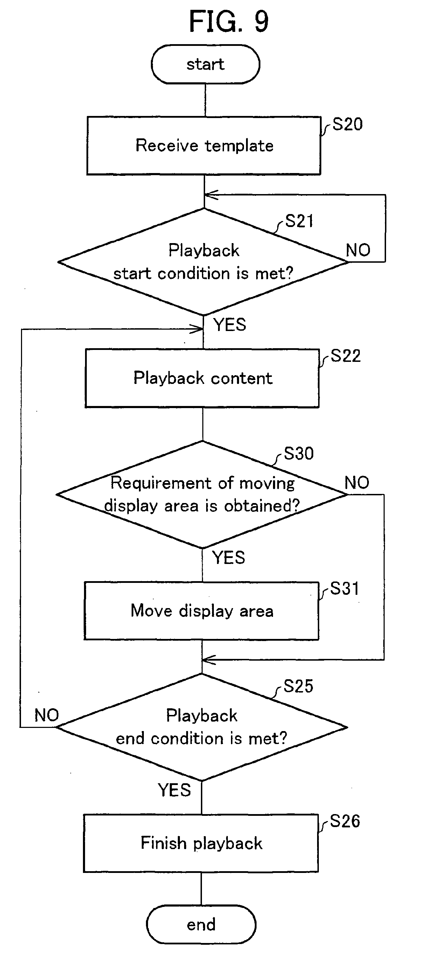

Fig. 9 shows the processing in the control section 31 of the mobile communications terminal 12. The processing in Fig. 9 is different from the processing in Fig. 6 in that the control section 31 judges whether or not a move requirement of the display areas is acquired (S30) and the display area is moved in response to the acquisition of the a move requirement (S31), but other processes are identical.

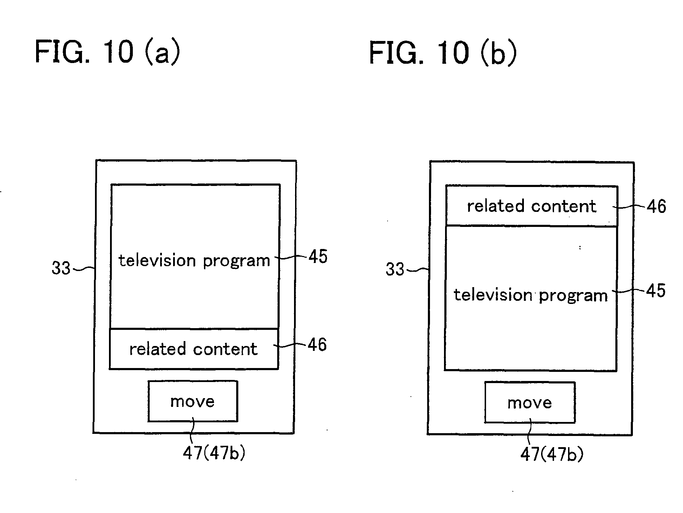

Figs. 10(a) and 10(b) illustrate examples of displays before and after the step of moving the display areas in Step S31. Assume that, as shown in Fig. 10(a), before the move of the display areas, the wide display area 45 displays a picture of a television program, while the narrow display area 46 displays a relating content of the television program. If the user selects the move button 47b in order to change the display positions of the relating contents, as shown in Fig. 10(b), the narrow display area 46 moves upward while the wide display area 45 moves downward. As a result, the relating content is display on the upper side, and the picture of the television program is displayed on the lower side.

In this way, using the display template provided from the server 11 of the present embodiment, the user of the mobile communications terminal 12 selects the move button 47b, so that the display areas 45 and 46 are moved. As a result, the display template causes a content to be displayed at a desired position, and allows for a change in the display layout of the contents.

In a case where another communications terminal, such as a television receiver and a monitor having display control capability, exists in proximity to the information communications terminal, it is possible to move one of the display areas 45 and 46 of the mobile communications terminal 12 to the display screen of the another communications terminal. In such a case, the server 11 is required to acquire identification information such as URI and network address, in order to identify the another communications terminal. There are several conceivable methods of acquiring the identification information: the identification information is registered in the server 11 in advance; and the mobile communications terminal 12 acquires identification information from the another communications terminal via short-distance wireless communications means such as infrared communications, the identification information thus acquired is supplied to the server 11, and the server 11 is instructed to display the content on the another communications terminal.

### [Embodiment 3]

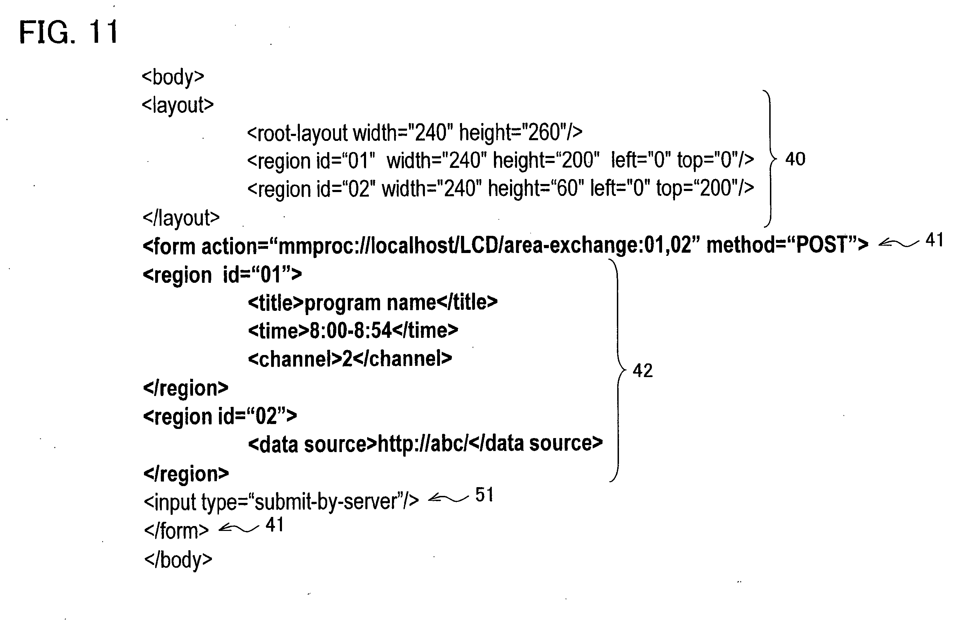

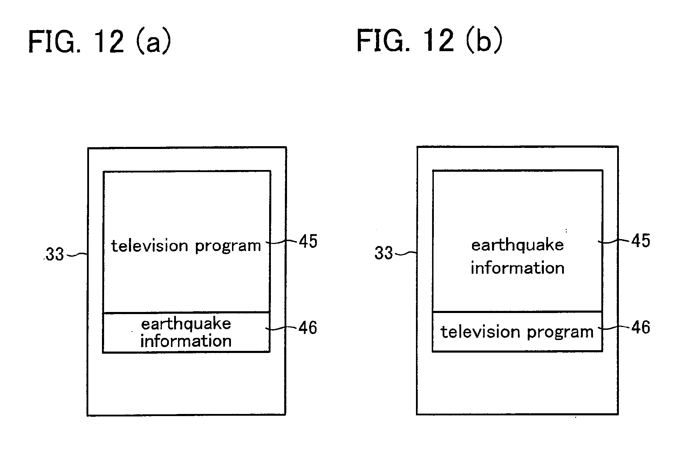

The following will describe a further embodiment of the present invention in reference to Figs. 11 and 12. A communications network system of the present embodiment and the communications network system 10 shown in Figs. 1-7 share the arrangements and processing, except that, in the communications system of the present embodiment, the contents displayed on the display areas 45 and 46 are switched in response to the acquisition of a predetermined change instruction signal from the server 11. By the way, members having the same functions as those described in the embodiment above are given the same numbers, so that the descriptions are omitted for the sake of convenience.

Fig. 11 relates to the present embodiment and shows an example of a display template synthesized in the template synthesizing section 26. The display template in the figure is identical with the display template shown in Fig. 3, except that the content of <input type> tag indicating a trigger for executing the command data 41 is different. As shown in Fig. 11, the <input type> tag (trigger information) 51 in the original template acquired from the template storage section 23 indicates the acquisition of a predetermined change instruction signal from the server 11. If "value=" "" is omitted from the <input type> tag 51, the selection button 47 is not shown on the display section 33 of the mobile communications terminal 12. This non-display of the selection button 47 is performed in such a manner that the control section 31 of the mobile communications terminal 12 interprets the display template.

Figs. 12(a) and 12(b) show display examples before and after the switching of the display areas in Step S24, shown in Fig. 6. Assume that, as shown in Figs. 12(a), before the switching of the display areas, a picture of a television program is displayed on the wide display area 45 while earthquake information is displayed on the narrow display area 46. In this case, if the server 11 judges that the earthquake information is important and sends a predetermined change instruction signal to the mobile communications terminal 12, the earthquake information is displayed on the wide display area 45 while the picture of the television program is shown in the narrow display area 46, as shown in Fig. 12(b).

In this manner, using the display template supplied from the server 11 of the present embodiment, the mobile communications terminal 12 acquires a predetermined change instruction signal from the server 11. With this, the contents displayed on the respective display areas 45 and 46 are switched with one another. As a result, the display layout of the contents displayed on the mobile communications terminal 12 is changed at the server 11 side. Also, a content, which is desired on the server 11 side to be displayed in detail, can be displayed on a display area with a wide display size. In other words, the user of the mobile communications terminal 12 can enjoy an easy-to-use service without giving any instruction, e.g. important information is displayed in a large size.

### [Embodiment 4]

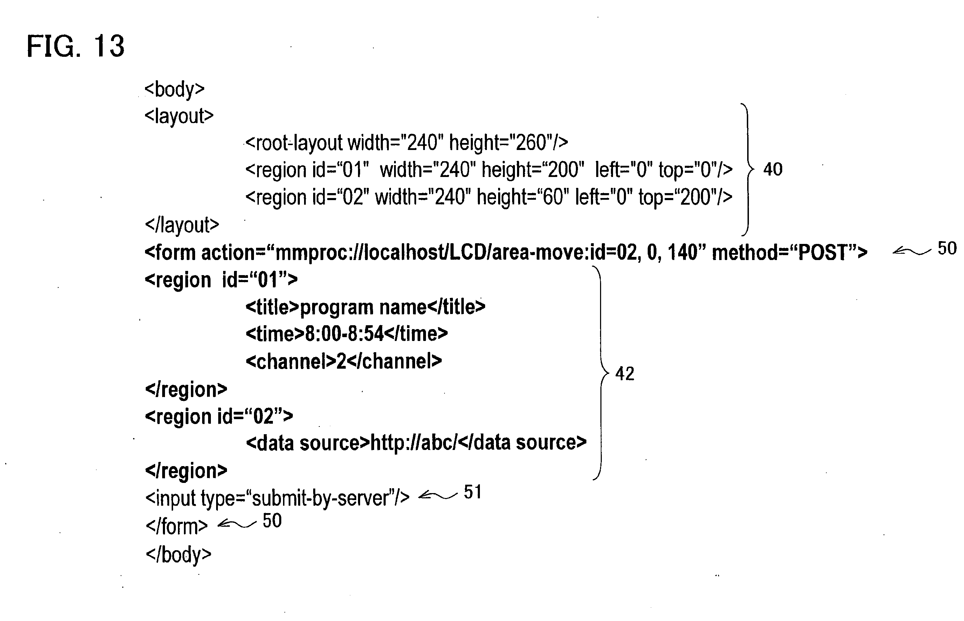

The following will describe still another embodiment of the present invention, with reference to Fig. 13. A communications network system of the present embodiment is different from the communications network system 10 shown in Figs. 8-10, in such a point that display areas 45 and 46 are moved in response to the acquisition of a predetermined change instruction signal from a server 11. Except this point, these communications network systems share the arrangements and processing. By the way, members having the same functions as those described in the embodiment above are given the same numbers, so that the descriptions are omitted for the sake of convenience.

Fig. 13 relates to the present embodiment and shows an example of a display template synthesized by a template synthesizing section 26. The display template in the figure is identical in terms of data with the display template in Fig. 8, except that the content of <input type> tag indicating a trigger for executing command data 50. As shown in Fig. 13, the <input type> tag 51 of an original template acquired from the template storage section 23 indicates that a predetermined change instruction signal is acquired from the server 11. In a case where "value=" "" is omitted from the <input type> tag 51, a selection button 47 is not displayed on the display section 33 of the mobile communications terminal 12. This non-display of the selection button 47 is performed in such a manner that the control section 31 of the mobile communications terminal 12 interprets the display template.

Therefore, using a display template supplied from the server 11 of the present embodiment, the mobile communications terminal 12 acquires a predetermined change instruction signal from the server 11. With this, the display areas 45 and 46 are moved. As a result, the contents are displayed at positions desired on the server 11 side, and hence the display layout of the contents can be changed.

It is noted that, in the communications network system shown in Figs. 11 and 13, the mobile communications terminal 12 may refuse the reception of a predetermined change instruction signal from the server 11, or may ignore the signal. Also, the mobile communications terminal 12 may ignore sets of command data 41 and 50. In these cases, it is possible to prevent the display layout from being changed without the user's desire.

The predetermined change instruction signal may be included in a content. In such a case, the display layout can be changed in line with the content.

### [Embodiment 5]

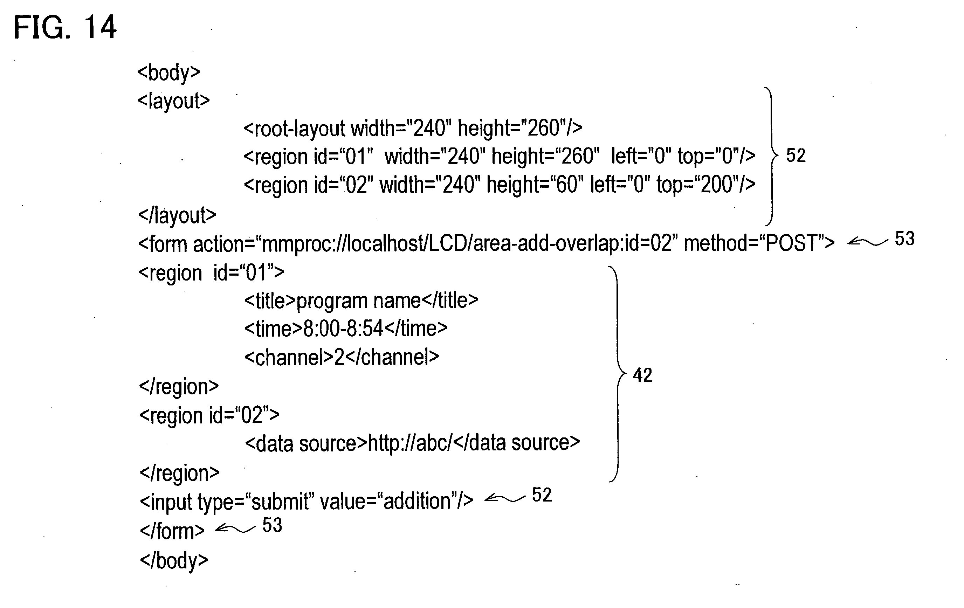

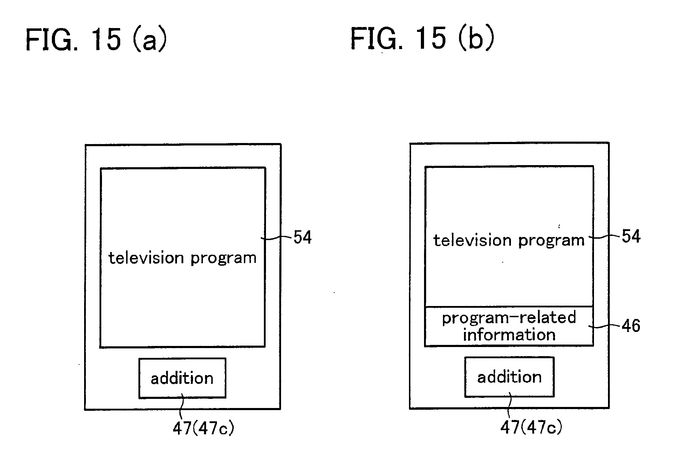

The following will describe yet another embodiment of the present invention in reference to Figs. 14 and 15. A communications network system of the present embodiment is different from the communications network system 10 shown in Figs. 1-7, in such a point that, in the present embodiment, a new display area is added inside a particular display area, when the user pushes an "addition" button. Except this point, these communications network systems share the arrangements and processing. By the way, members having the same functions as those described in the embodiment above are given the same numbers, so that the descriptions are omitted for the sake of convenience.

Fig. 14 relates to the present embodiment and shows an example of a display template synthesized by a template synthesizing section 26. The display template shown in the figure is identical in terms of data with the display template shown in Fig. 3, except display area data acquired from the template storage section 23 and command data acquired form the command storage section 24.

Display area data 52 shown in Fig. 14 and the display area data shown in Fig. 3 are different in the following points: a wide display area 54 shown in Fig. 4 covers an entire display area (240 dots in width and 260 dots in height) of the contents, and an addition button 47c is provided as the selection button 47. Except these points, these display areas are identical with each other.

Command data 53 shown in Fig. 14 instructs to perform the following overlap display: a narrow display area 46 is added so as to overlap the lower part of the wide display area 54.

The processing in the control section 31 of the mobile communications terminal 12 of the present embodiment is different from the processing in Fig. 6 in such points that (i) it is judged in S23 whether or not a requirement of adding a display area is acquired and (ii) a narrow display area 46 is added if the requirement is acquired in S24. Except these points, these sets of processing are identical to each other.

Figs. 15(a) and 15(b) show display examples before and after the step of adding the narrow display area 46. Assume that, as shown in Fig. 15(a), before the addition of the display area, a picture of a television program is displayed on the wide display area 54. In such a case, when the user selects the addition button 47c in order to additionally display program-related information, the narrow display area 46 is added to the lower part of the wide display area 54 as shown in Fig. 15(b), so that the program-related information is displayed on the picture of the television program, in an overlapped manner.

In this way, the new display area 46 is added by allowing the user of the mobile communications terminal 12 to select the addition button 47c, using the display template supplied from the server 11 of the present embodiment. As a result, using the display template, the user of the mobile communications terminal 12 can display a new content at a desired timing, so as to change the display layout of the contents. In the examples in Fig. 15, while watching a TV program, the user of the mobile communications terminal 12 can also view information related to the program at a desired timing.

In the present embodiment, the overlap display by which the image in the narrow display area 46 is displayed on the image in the wide display area 54 is performed. Alternatively, it is also possible to perform tiling display, which is arranged such that the wide display area 54 is reduced in size in accordance with the size of the narrow display area 46. To do so, the description "area-add-overlap" in the command data 53 in Fig. 14 is changed to the description "area-add-tiling".

Also, it is possible to cause the added display area 46 to receive the user's instruction, by displaying, for instance, a web page in the display area 46.

In some cases, it is preferable to allow the user to grasp what type of content is displayed in the display area 46 to be added, before adding the display area by means of the addition button 47c. To do so, for instance, information briefly describing the content to be displayed is exhibited on the addition button 47c.

### [Embodiment 6]

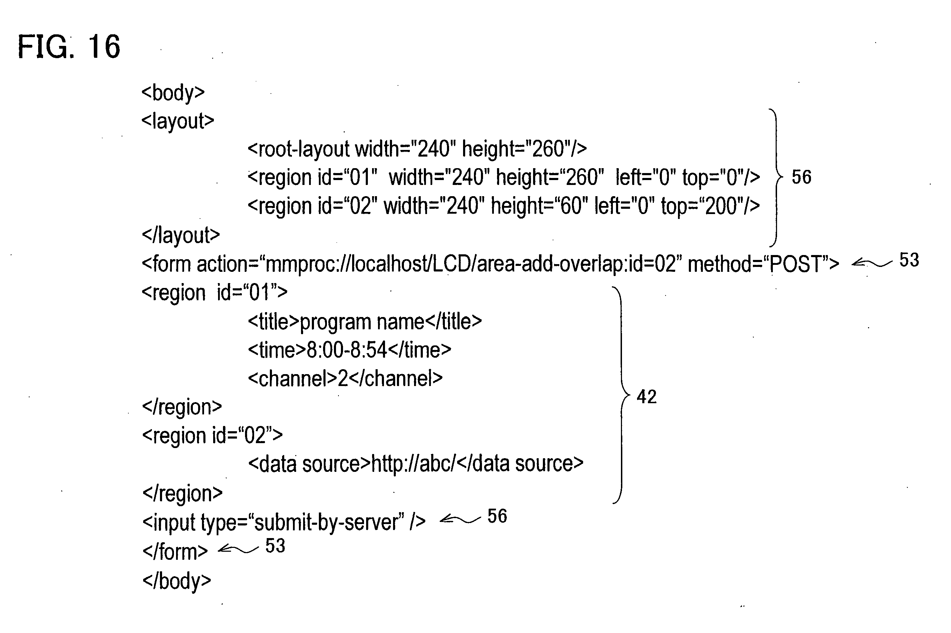

The following will describe yet another embodiment of the present invention in reference to Fig. 16. A communications network system of the present embodiment is different from the communications network system 10 shown in Figs. 14 and 15, in such a point that a new display area is added to a display area in response to the acquisition of a predetermined change instruction signal from the server 11. Except this point, these communications network systems share the arrangements and processing. By the way, members having the same functions as those described in the embodiment above are given the same numbers, so that the descriptions are omitted for the sake of convenience.

Fig. 16 relates to the present embodiment and shows an example of a display template synthesized by the template synthesizing section 26. The display template in the figure is different from the display template in Fig. 14, in terms of display area data acquired from the template storage section 23. Except this display area data, these display templates are identical with each other in terms of data. Display area data 56 shown in Fig. 16 is identical with the display area data 52 in Fig. 14, except the content of <input type> tag indicating a trigger for executing the command data 53.

The <input type> tag shown in Fig. 16 indicates that a predetermined change instruction signal is acquired from the server 11. In the <input type> tag in the figure, "value=" "" which instructs the selection button 47 to appear is omitted. On this account, in a case where the control section 31 1 of the mobile communications terminal 12 controls the display section 33 using the display template shown in the figure, the display screen of the display section 33 exhibits the images shown in Figs. 15(a) and 15(b), but the selection button 47 is removed therefrom.

On this account, a new display area 46 is added in such a manner that the mobile communications terminal 12 acquires a predetermined change instruction from the server 11, using the display template supplied from the server 11 of the present embodiment. As a result, it is possible from the server 11 side to change the display layout of the contents displayed on the mobile communications terminal 12.

For instance, as shown in Figs. 15(a) and 15(b), assume that, in the mobile communications terminal 12, pictures of a television program are specified as the content displayed on the wide display area 54, while program-related information is specified as the content displayed on the narrow display area 46. Examples of the program-related information include shopping information in regard of commercial products related to the television program, and voting information in regard of questionnaires related to the television program.

In this case, when the server 11 sends a predetermined change instruction signal to the mobile communications terminal 12, the program-related information is added to a picture of the television program displayed on the mobile communications terminal 12. On this account, the server 11 is capable of causing the program-related information, which corresponds to the television program currently on the air, to be displayed at a suitable timing.

Although the overlap display is carried out in the present embodiment, it is also possible to perform tiling display by changing the description "area-add-overlap" in the command data 53 to the description "area-add-tiling".

### [Embodiment 7]

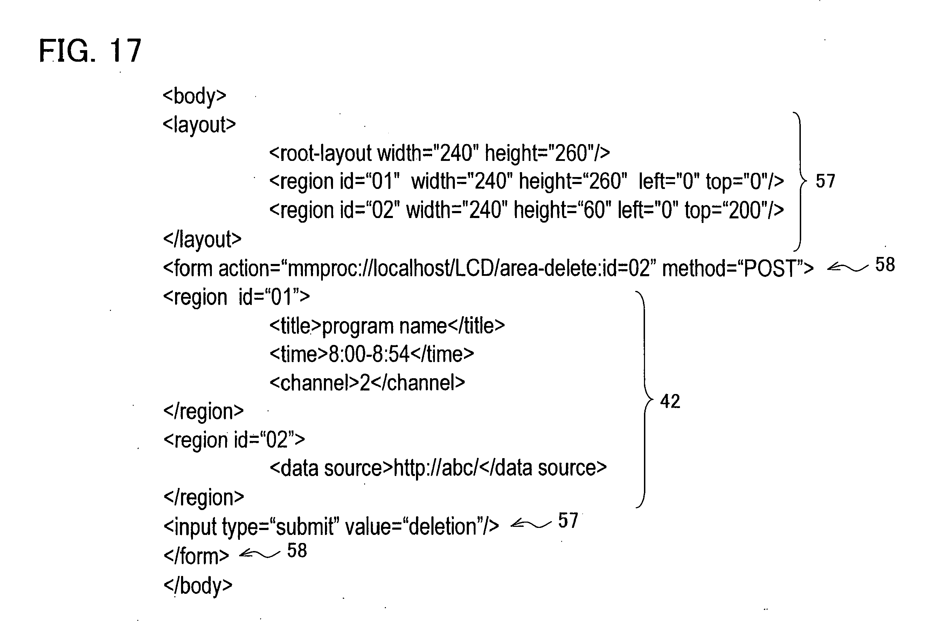

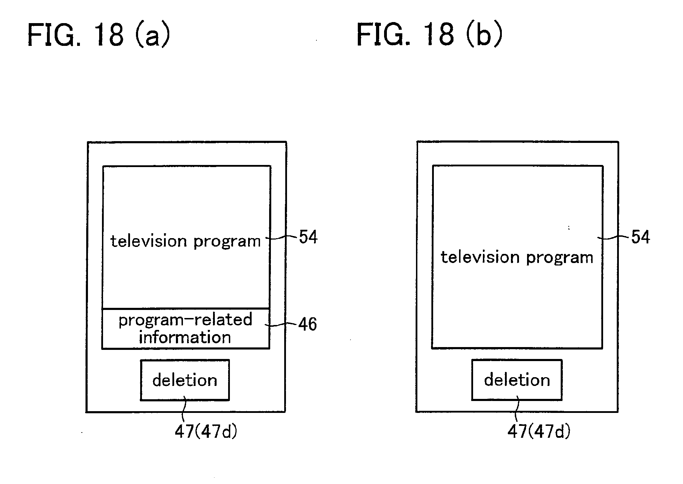

The following will describe yet another embodiment of the present invention in reference to Figs. 17 and 18. A communications network system of the present embodiment is different from the communications network system 10 shown in Figs. 14 and 15, in such a point that, in response to the user's push of a "delete" button, a display area which is in another display area and is specified by change instruction information is deleted. Except this point, these communications network systems share the arrangements and processing. By the way, members having the same functions as those described in the embodiment above are given the same numbers, so that the descriptions are omitted for the sake of convenience.

Fig. 17 relates to the present embodiment and shows an example of a display template synthesized by a template storage section 26. The display template shown in the figure is different from the display template in Fig. 14, in terms of display area data acquired from the template storage section 23 and command data acquired from the command storage section 24. Except these points, these display templates are identical in terms of data.

Display area data 57 shown in Fig. 17 is different from the display area data 40 shown in Fig. 14, in such a point that the selection button 47 is a delete button 47d. Except this point, these sets of display area data are identical with each other. Command data 58 shown in Fig. 17 instructs to delete the narrow display area 46 in the lower part of the wide display area 54.

The processing in the control section 31 of the mobile communications terminal 12 of the present embodiment is identical with the processing shown in Fig. 6, except such points that (i) it is judged whether or not the requirement of deletion of a display area is acquired in S23, and (ii) if the requirement of deletion is acquired in S24, the narrow display area 46 is deleted.

Figs. 18(a) and 18(b) show an example of displays before and after the step of deleting the narrow display area 46. As Fig. 18(a) shows, before the deletion of the display area, pictures of a television program are displayed on the wide display area 54, while program-related information is displayed on the narrow display area 46. In this case, if the user selects the delete button 47d to make the program-related information disappear, as shown in Fig. 18(b), the narrow display area 46 is deleted and pictures of the television program are displayed on the wide display area 54.

In a case of the overlap display where, before the deletion of the display area, the image on the narrow display area 46 overlaps the image on the wide display area 54, pictures of the television program are uninterruptedly displayed on the wide display area 54, even after the deletion. In this case, a part of the image on the wide display area 54, which was hidden by the narrow display area 46, becomes displayed.

Meanwhile, in a case where tiling display is carried out so that a picture of the television program is reduced in size in accordance with the size of the narrow display area 46, the picture of the television program after the deletion of the display area is enlarged or returns to the original size, in accordance with the size of the wide display area 54.

In this manner, using the display template supplied from the server 11 of the present embodiment, the user of the mobile communications terminal 12 can delete the display area 46 by selecting the delete button 47d. As a result, using the display template, the user of the mobile communications terminal 12 can make at least one of the contents disappear at a desired timing, so as to change the display layout of the contents. In the example shown in Figs. 18(a) and 18(b), while watching a television program currently on the air and its related information, the user of the mobile communications terminal 12 can delete the related information at a desired timing.

### [Embodiment 8]

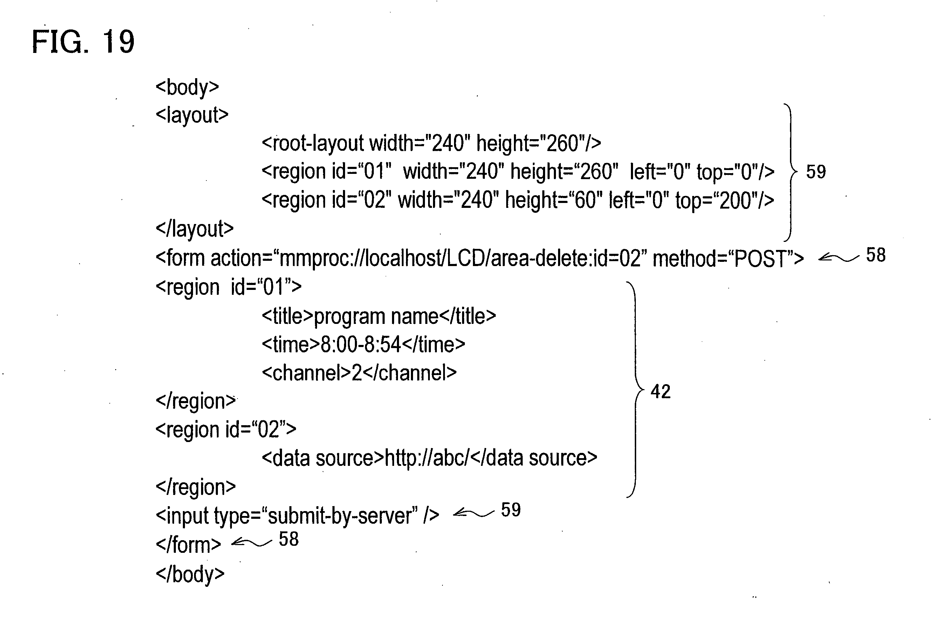

The following will describe yet another embodiment of the present invention in reference to Fig. 19. A communications network system of the present embodiment is different from the communications network system 10 shown in Figs. 17 and 18, in such a point that, in response to the acquisition of a predetermined change instruction signal from the server 11, a display area, which is in another display area and is specified by the change instruction signal, is deleted. Except this point, these communications network systems share the arrangements and processing. By the way, members having the same functions as those described in the embodiment above are given the same numbers, so that the descriptions are omitted for the sake of convenience.

Fig. 19 shows an example of a display template synthesized by the template synthesizing section 26. The display template shown in the figure is different from the display template in Fig. 17, in terms of display area data acquired from the template storage section 23. Except this, these display templates are identical in terms of data. Display area data 59 shown in Fig. 19 is different from the display area data 56 shown in Fig. 17, in terms of the content of the <input type> tag indicating a trigger for executing the command data 58. Except this, these sets of display area data are identical with each other.

The <input type> tag shown in fig. 19 indicates that a predetermined change instruction signal is acquired from the server 11. In this <input type> tag in the figure, "value=" "" which instructs the selection button 47 to appear is omitted. On this account, in a case where the control section 31 of the mobile communications terminal 12 controls the display section 33 using the display template shown in the figure, the display screen of the display section 33 exhibits the images shown in Figs. 18(a) and 18(b), but the selection button 47 is removed therefrom.

In this manner, using the display template supplied from the server 11 of the present embodiment, the display area 46 can be deleted when the mobile communications terminal 12 acquires the predetermined change instruction signal from the mobile communications terminal 12. As a result, it is possible from the server 11 side to change the display layout of the contents displayed on the mobile communications terminal 12.

For instance, as shown in Fig. 18, assume that, in the mobile communications terminal 12, pictures of a television program are specified as the content displayed on the wide display area 54, while program-related information is specified as the content displayed on the narrow display area 46.

In this case, after the server 11 sends a predetermined change instruction signal to the mobile communications terminal 12, the mobile communications terminal 12 only displays the pictures of the television program. As a result, the server 11 can make program-related information, which corresponds to a television program currently on the air, disappear at a suitable timing.

### [Embodiment 9]

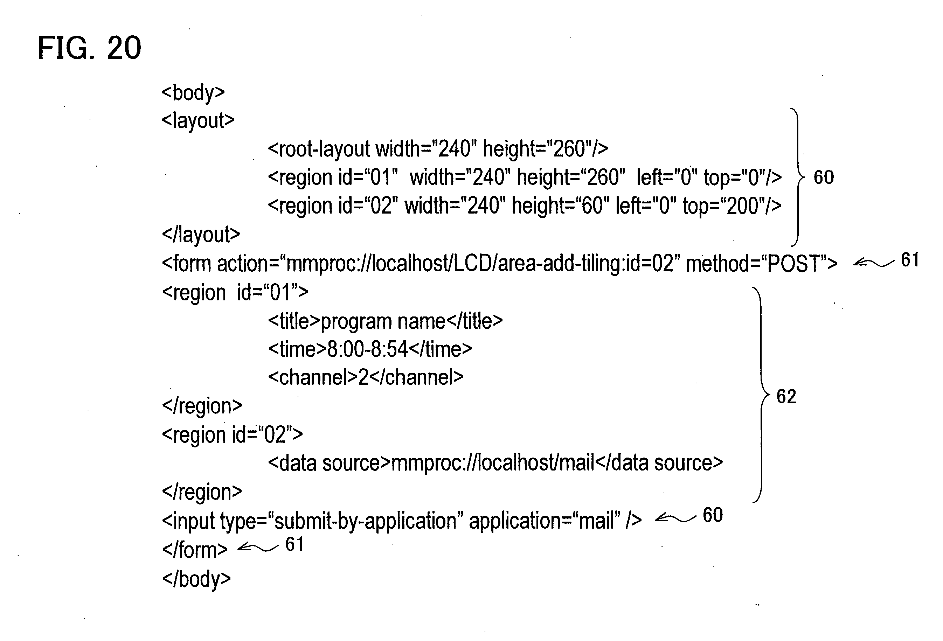

The following will describe yet another embodiment of the present invention in reference to Figs. 20-23. A communications network system of the present embodiment is different from the communications network system 10 shown in Figs. 14 and 15, in such a point that, when particular application software runs on the mobile communications terminal 12, a new display area is added to another display area so that tiling display is performed. Except this point, these communications network systems share the arrangements and processing. By the way, members having the same functions as those described in the embodiment above are given the same numbers, so that the descriptions are omitted for the sake of convenience.

Fig. 20 relates to the present embodiment and shows an example of a display template synthesized by the template synthesizing section 26. The display template includes: display area data 60 included in an original template acquired from the template storage section 23; command data 61 acquired from the command storage section 24; and content instruction data 62 acquired from the content storage section 25.

The display area data 60 shown in Fig. 20 is identical with the display area data 56 shown in Fig. 16, except the content of the <input type> tag indicating a trigger for executing the command data 61.

The <input type> tag shown in Fig. 20 indicates that a predetermined change instruction signal is acquired in response to the operation of application software. In the <input type> tag, "application=" "" specifies the associated application software. The application software specified in the example in the figure is mail software (mail).

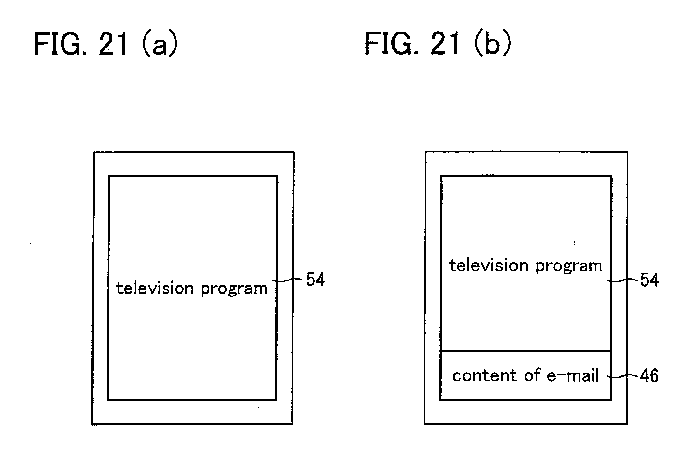

In the <input type> tag in Fig. 20, "value=" "" which instructs the selection button 47 to appear is omitted. On this account, in a case where the control section 31 of the mobile communications terminal 12 controls the display section 33 using the display template shown in the figure, the display screen of the display section 33 exhibits the images shown in Figs. 21(a) and 21(b), but the selection button 47 is removed therefrom.

The command data 61 shown in Fig. 20 is identical with the command data 53 shown in Fig. 16, except that, by the command data 61, the tiling display is performed. The content instruction data 62 shown in Fig. 20 is identical with the content instruction data 42 shown in Fig. 16, except that, according to the content instruction data 62, which content is displayed on the narrow display area 46 is specified by a pointer specifying a position of information of the mail software, e.g. a title of a received mail or a main text of the mail.

The processing in the control section 31 of the mobile communications terminal 12 of the present embodiment is identical with the processing in Fig. 6, except that (i) it is judged whether or not in S23 an e-mail is acquired and mail software runs, and (ii) if the mail software runs in S24, the narrow display area 46 is added.

Figs. 21 (a) and 21 (b) show an example of displays before and after the step of adding the narrow display area 46. Assume that, as shown in Fig. 21 (a), pictures of a television program are displayed on the wide display area 46, before the addition of the display area. In this case, when the mobile communications terminal 12 receives an e-mail, the mail software starts, and as shown in Fig. 21(b), the narrow display area 46 is provided in the lower part of the wide display area 54, so that the content of the e-mail and the picture of the television program are displayed in the way of tiling display. It is noted that examples of the content of the e-mail include a title, sender, and main text.

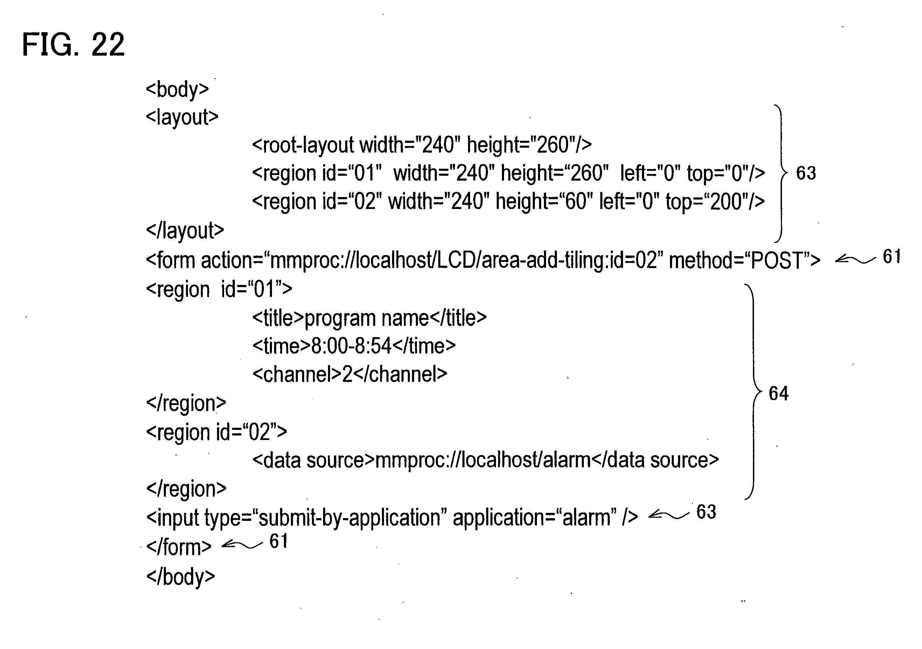

Fig. 22 relates to the present embodiment and shows another example of the display template synthesized by the template synthesizing section 26. The display template shown in Fig. 22 is identical with the display template shown in Fig. 20, except that the narrow display area 46 is added in response to the operation of alarm software.

The display area data 63 shown in Fig. 22 is identical with the display area data 60 shown in Fig. 20, except that the application software specified by the <input type> tag indicating a trigger for executing the command data is alarm software (alarm). The content instruction data 64 shown in Fig. 22 is identical with the content instruction data 62 shown in Fig. 20, except that, according to the content instruction data 64, which content is displayed on the narrow display area 46 is specified by a pointer specifying a position of information of the alarm software, e.g. a title of a received mail or a main text of the mail.

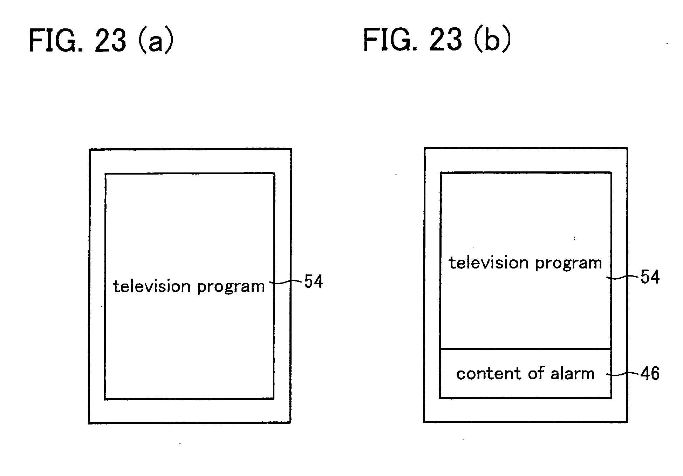

Figs. 23(a) and 23(b) show an example of displays before and after the step of adding the narrow display area 46. As shown in Fig. 23(a), assume that, before the addition of the display area, pictures of a television program are displayed on the wide display area 54. In this case, when the alarm software runs in the mobile communications terminal 12, as shown in Fig. 23(b), the narrow display area 46 is provided in the lower part of the wide display area 54, so that a picture of the television program and the content of the alarm are displayed in the way of tiling display. Examples of the content of the alarm include time of emergence and comments.

Therefore, with the display template supplied from the server 11 of the present embodiment, the mobile communications terminal 12 can add a new display area 46 using the operation of the application software as a trigger. As a result, it is possible to prevent a change in the state of the mobile communications terminal 12 on account of the operation of the application software from being overlooked, when a displayed content almost entirely covers the display screen.

In a case where the display template shown in Fig. 20 is used, it is possible to add a new display area 46 in line with the instruction from the server 11, as the server 11 sends, to the mobile communications terminal 12, an e-mail which includes information specifying a content displayed on the narrow display area 46. In other words, the e-mail can substitute for the change instruction signal which is sent from the server 11 in the communications network system shown in Fig. 16.

Although the mail software and alarm software were taken as examples of the application software, the present invention can adopt other types of software such as scheduler.

### [Embodiment 10]

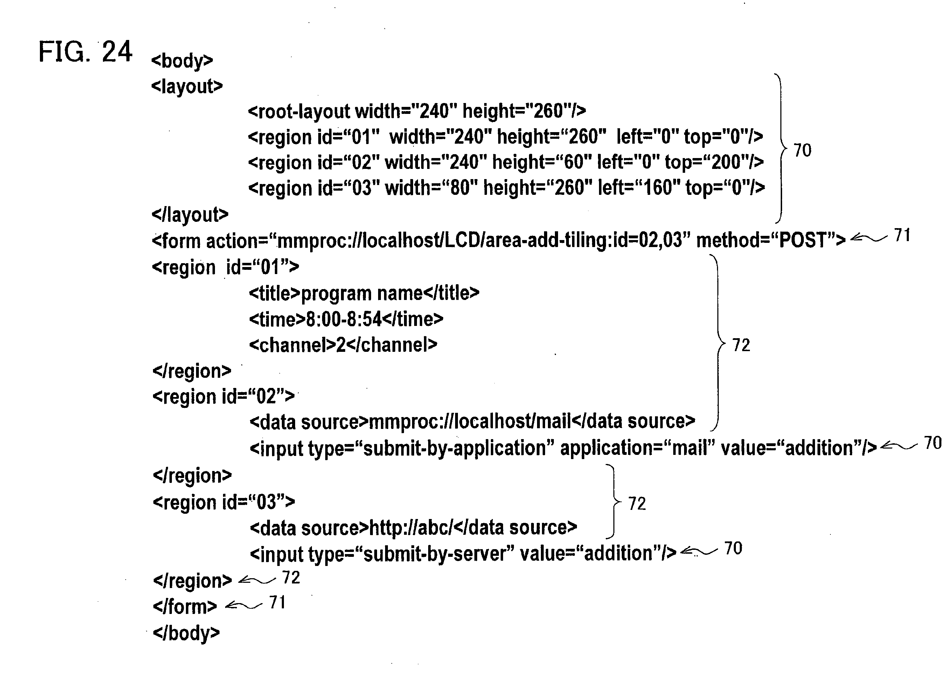

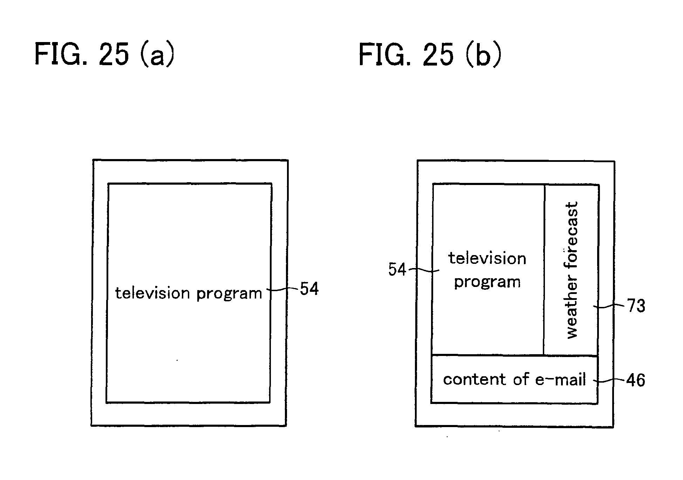

The following will describe yet another embodiment of the present invention in reference to Figs. 24 and 25. A communications network system of the present embodiment is different from the communications network system 10 shown in Fig. 16, in such points that, (i) in response to the acquisition of a predetermined change instruction signal from the server 11, a new display area is added to another display area so that the tiling display is performed, and (ii) in response to the operation of application software on the mobile communications terminal 12, a new display area is added to another display area so that the tiling display is performed. Except these points, these communications network systems share the arrangements and processing. By the way, members having the same functions as those described in the embodiment above are given the same numbers, so that the descriptions are omitted for the sake of convenience.

Fig. 24 relates to the present embodiment and shows an example of a display template synthesized by the template synthesizing section 26. The display template includes: display area data 70 included in an original template acquired from the template storage section 23; command data 71 acquired from the command storage section 24; and content instruction data 72 acquired from the content storage section 25.

The display area data 70 shown in Fig. 24 is identical with the display area data 60 shown in Fig. 20, except in the following points: a new display area 73 (80 dots in width, 260 dots in height, and has an id="03") is provided in the right part of the wide display area 54, and the <input type> tag indicating a trigger for executing the command data 71 is provided for each of the added display areas, i.e. for each of the narrow display area 46 and the new display area 73. In the following description, the wide display area 54 will be referred to as first display area 54, the narrow display area 46 will be referred to as second display area 46, and the new display area 73 will be referred to as third display area 73.

The command data 71 shown in Fig. 24 is identical with the command data 61 shown in Fig. 20, except in such a point that the second display area 46 or the third display area 73 is added to the first display area 54. The content instruction data 72 shown in Fig. 24 is identical with the content instruction data 62 shown in Fig. 20, except in such a point that information specifying the content displayed on the third display area 73 is added to the content instruction data 72.

The processing in the control section 31 of the mobile communications terminal 12 of the present embodiment is identical with the processing shown in Fig. 6, except in the following points: (i) it is judged whether or not an e-mail is acquired and mail software runs in S23, and it is also judged whether or not a predetermined change instruction signal is acquired from the server 11, and (ii) if the mail software runs, the second display area 46 is added, while, if the predetermined change instruction signal is acquired from the server 11, the third display area 73 is added.

Figs. 25(a) and 25(b) show an example of displays before and after the step of adding the second display area 46 and/or the third display area 73. As shown in Fig. 25(a), before the addition of the display area, pictures of a television program are displayed on the first display area 54.

In this case, if the mobile communications terminal 12 receives an e-mail, mail software runs so that, as shown in Fig. 25(b), the second display area 46 is provided in the lower part of the first display area 54, and hence a picture of the television program and the content of weather forecast are displayed in the way of tiling display. Meanwhile, if a predetermined change instruction signal is supplied from the server 11, as shown in Fig. 25(b), the third display area 73 is provided in the right part of the first display area 54, so that a picture of the television program and the content of weather forecast are displayed in the way of tiling display.

Therefore, with the display template supplied from the server 11 of the present embodiment, the mobile communications terminal 12 can display three contents in the way of tiling display, by adding two display areas 46 and 73 using predetermined triggers. By the way, according to the present embodiment, it is clearly possible to provide four or more display areas.

In a case of using a content that varies over time, such as the weather forecast, the content is preferably updateable. This update is realized in the following manner: while the display template server 11 sends, to the mobile communications terminal 12, information of a link target that should be updated, the mobile communications terminal 12 updates, based on the received information, a link target of a data source in the content instruction data 72 of the display template.

### [Embodiment 11]

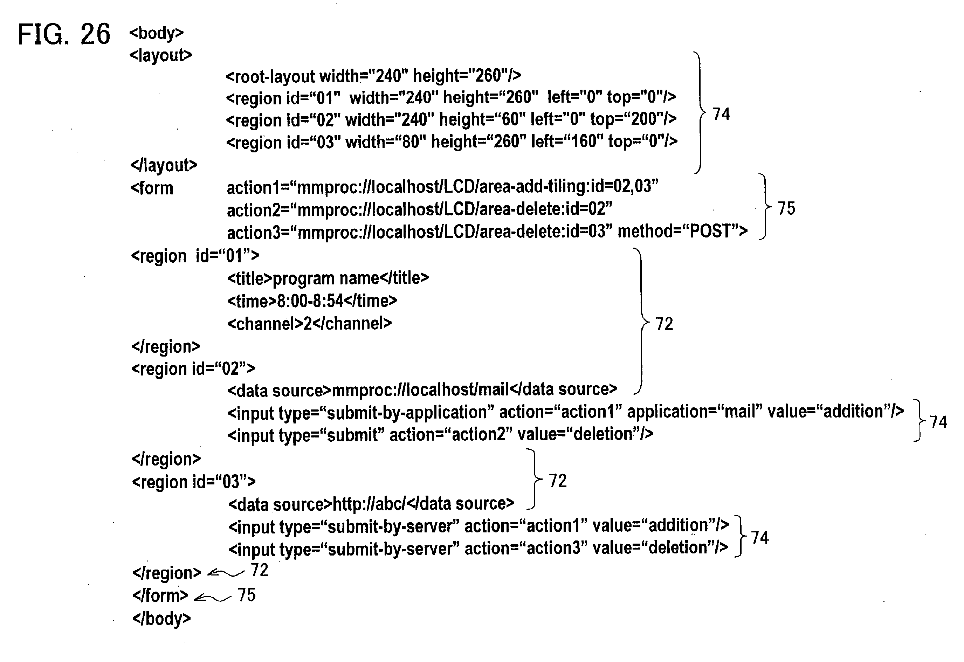

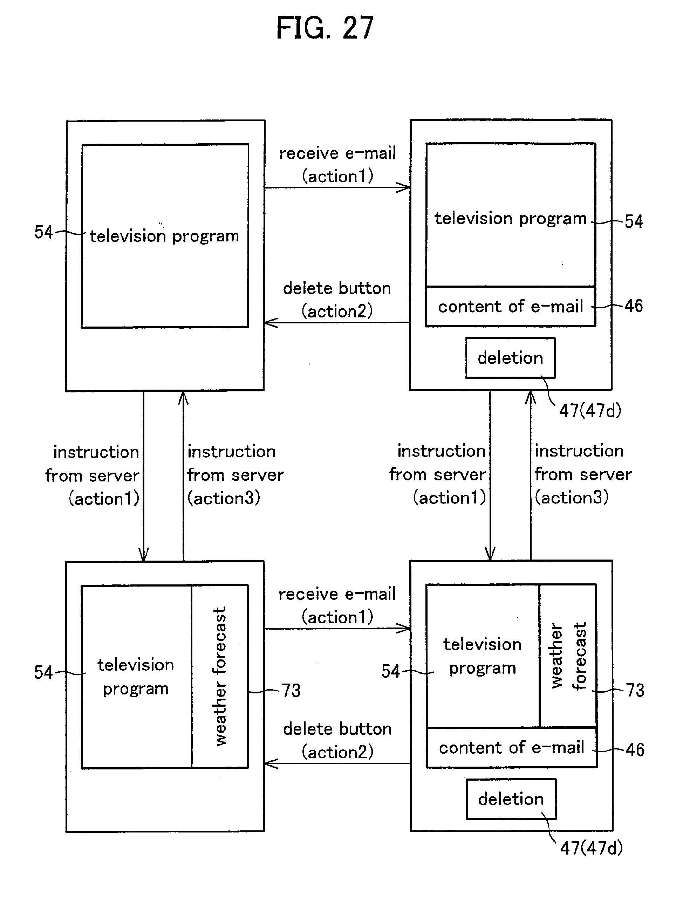

The following will describe yet another embodiment of the present invention in reference to Figs. 26 and 27. A communications network system of the present embodiment is different from the communications network system 10 shown in Figs. 24 and 25, in such a point that, the communications network system of the present embodiment further includes (i) processing of deleting the second display area 46 in response to the push of a "delete" button by the user, and (ii) processing of deleting the third display area 73 in response to the acquisition of a predetermined change instruction signal from the server 11. Except this point, these communications network systems share the arrangements and processing. By the way, members having the same functions as those described in the embodiment above are given the same numbers, so that the descriptions are omitted for the sake of convenience.

Fig. 26 relates to the present embodiment and shows an example of a display template synthesized by the template synthesizing section 26. The display template in the figure is identical with the display template shown in Fig. 24, except in such a point that display area data acquired from the template storage section 23 is different from command data 71 acquired from the command storage section 24.

The command data 75 shown in Fig. 26 includes three more processes, as compared to the command data 71 shown in Fig. 24. In the first process (action 1), the second display area 46 or the third display area 46 is added to the first display area 54, as in the case of the command data 71 shown in Fig. 24. In the second process (action2), the second display area 46 is deleted. In the third process (action 3), the third display area 73 is deleted.

The display area data 74 shown in Fig. 26 is identical with the display area data 70 shown in Fig. 24, except the <input type> tag indicating a trigger for executing the command data 75. In the display area data 74, two <input type> tags are provided for each of the second display area 46 and the third display area 73. The <input type> tag includes "action=" "" that indicates which process of the command data 75 is carried out.

More specifically, for the second display area 46 (id="02"), the display area data 74 includes the <input type> tag indicating that the first process of the command data 75 is performed in response to the operation of the mail software, and the <input type> tag indicating that the second process of the command data 75 is performed in response to the push of the delete button. Meanwhile, for the third display area 73 (id="03"), the display area data 74 includes the <input type> tag indicating that the first process of the command data 75 is performed when the server 11 supplies a change instruction signal (value="addition"; hereinafter, add instruction signal) that indicates addition, and the <input type> tag indicating that the third process of the command data 75 is performed when the server 11 supplies a change instruction signal (value="deletion"; hereinafter, delete instruction signal) that indicates deletion.

The processing in the control section 31 of the mobile communications terminal 12 of the present embodiment is identical with the processing shown in Fig. 6, except that the steps S23 and S24 are different.

In the present embodiment, the following judgments are performed in S23: whether or not an e-mail is acquired and mail software runs; whether or not the delete button is pushed; whether or not the add instruction signal is supplied from the server 11; and whether or not the delete instruction signal is supplied from the server 11. Also, in S24, the second display area 46 is added if the mail software runs, the second display area 46 is deleted if the delete button is pushed, the third display area 73 is added if the add instruction signal is supplied, and the third display area 73 is deleted if the delete instruction signal is supplied.

Fig. 27 shows an example of how images displayed on the display section 33 of the mobile communications terminal 12 change. As shown in the top-left part of the figure, before the addition of the display area, a picture of a television program is displayed on the first display area 54. When the mobile communications terminal 12 in this state acquires an e-mail and the mail software runs, as shown in the top-right part of the figure shows, the second display area 46 is provided in the lower part of the first display area 54, so that a picture of the television program and the content of the e-mail are displayed in the way of tiling display (action 1). In this state, if the add instruction signal is supplied from the server 11, as shown in the bottom-left part of the figure, the third display area 73 is provided in the right part of the first display area 54, so that a picture of the television program and the content of weather forecast are displayed in the way of tiling display (action1).

Also, as shown in the top-right part of the figure, if the user pushes the delete button 47d while the first and second display areas 54 and 46 are displayed, the second display area 46 is deleted and a picture of the television program is enlarged to the original size, as shown in the top-left part of the figure (action2). Meanwhile, in the state above, when the add instruction signal is supplied from the server 11, the third display area 73 is provided in the right part of the first display area 54 and a picture of the television program and the content of weather forecast are displayed in the way of tiling display (action 1). In this manner, the first to third display areas 54, 46, and 73 display different contents.

When, as shown in the bottom-left part of the figure, the delete instruction signal is supplied from the server 11 while the first and third display areas 54 and 73 are displayed, the third display area 73 is deleted and a picture of the television program is enlarged to the original size, as shown in the top-left part of the figure (action3). Also, in the state above, when the mobile communications terminal 12 acquires an e-mail, the mail software runs and, as shown in the bottom-right part of the figure, the second display area 46 is provided in the lower parts of the first and third display areas 54 and 73, so that a picture of the television program, a picture of the weather forecast, and the content of the e-mail are displayed in the way of tiling display (action 1). In this manner, the first to third display areas 54, 46, and 73 display different contents.

When the user pushes the delete button 47d while the first to third display areas 54, 46, and 73 are displayed as shown in the bottom-right part of the figure, the second display area 46 is deleted and a picture of the television program and a picture of the weather forecast are enlarged as the first and third display areas 54 and 73 are enlarged, as shown in the bottom-left part of the figure (action2). In the state above, when the delete instruction signal is supplied from the server 11, the third display area 73 is deleted, and a picture of the television program is enlarged as the first display area 54 is enlarged, as shown in the top-right part of the figure (action3).

In this manner, using the display template supplied from the server 11 of the present embodiment, it is possible to add and delete the display areas in line with predetermined triggers, and cause at least one of the contents to appear or disappear.

### [Embodiment 12]

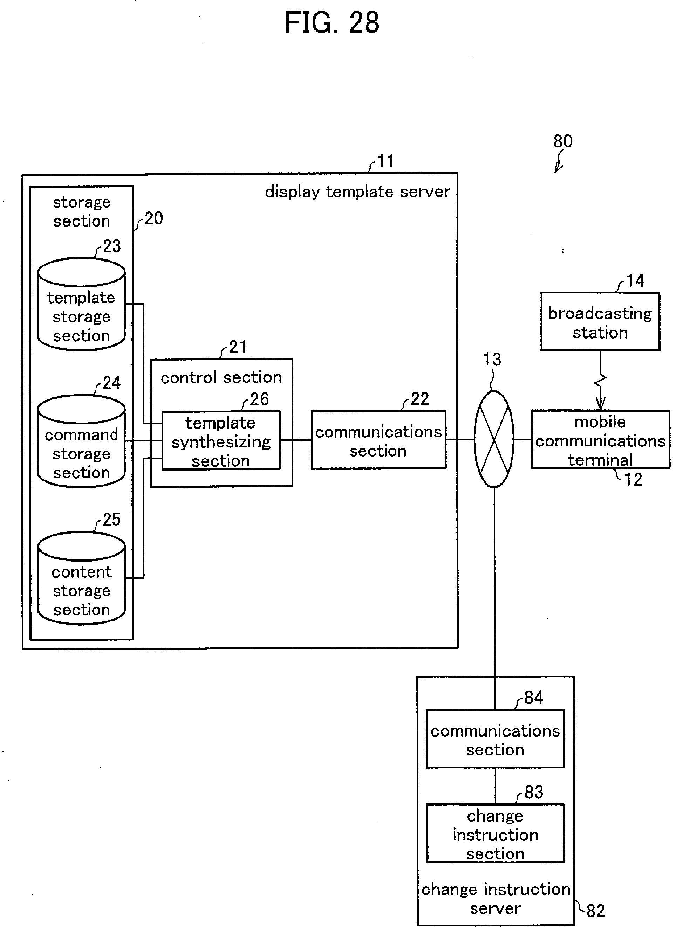

The following will describe yet another embodiment of the present invention in reference to Fig. 28. A communications network system of the present embodiment is different from the communications network system 10 shown in Figs. 1-7, in such a point that the change instruction section 27 is provided not in the display template server 11 but in another server. Except this point, these communications network systems share the arrangements and processing. By the way, members having the same functions as those described in the embodiment above are given the same numbers, so that the descriptions are omitted for the sake of convenience.

Fig. 28 shows the outline of a communications network system 80 of the present embodiment. The communications network system 80 shown in the figure is identical with the communications network system 10 shown in Fig. 1, except that the communications network system 80 is further provided with a change instruction server 82.

The change instruction server 82 sends the above-described predetermined change instruction signal to the mobile communications terminal 12 via the communications network 13. As shown in Fig. 28, the change instruction server 82 includes: a change instruction section 83 that generates the predetermined change instruction signal; and a communications section 84 that converts, into a format suitable for data communication, the change instruction signal generated by the change instruction section 83, and sends the converted signal to the communications network 13.

Therefore, in the present embodiment, the change instruction server 82 that is different from the display template server 11 sends the predetermined instruction signal to the mobile communications terminal 12. In this manner, the predetermined change instruction signal is supplied to the mobile communications terminal 12, either from the server 11 that provides the display template or from the another server 82.

In the present embodiment, the connection between the display template server 11 and the mobile communications terminal 12 and the connection between the change instruction server 82 and the mobile communications terminal 12 are realized by an identical communications network. However, these two connections may be realized by different communications networks.

### [Embodiment 13]

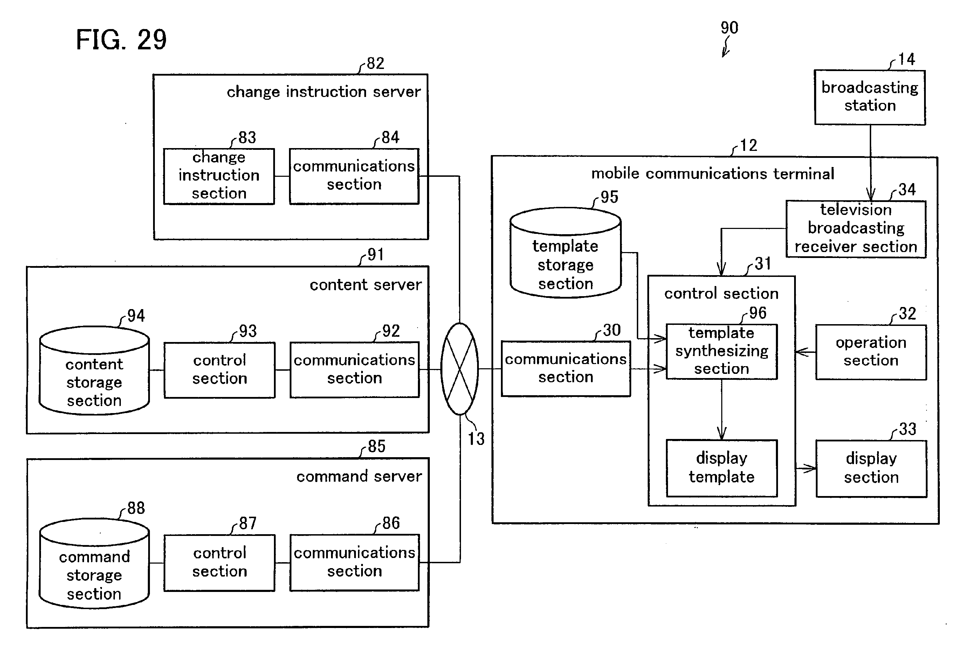

The following will describe yet another embodiment of the present invention in reference to Fig. 29. A communications network system of the present embodiment is different from the communications network system 80 shown in Fig. 28, in such points that the template storage section 23 and the template synthesizing section 26 are provided not in the display template server 11 but in the mobile communications terminal 12, and a command server and a content server are provided in place of the display template server 11. Except these points, these communications network systems share the arrangements and processing. By the way, members having the same functions as those described in the embodiment above are given the same numbers, so that the descriptions are omitted for the sake of convenience.

Fig. 29 shows the outline of the communications network system 90 of the present embodiment. As compared to the communications network system 10 shown in Fig. 28, the communications network system 90 shown in Fig. 29 includes a command server 85 and a content server 91, in place of the display template server 11.

The command server 85 provides, to the mobile communications terminal 12, various types of change instruction information that instructions a change in one or more display areas on the display screen of the mobile communications terminal 12. As shown in Fig. 29, the command server 85 includes a communications section 86, a control section 87, and a command storage section 88.

The communications section 86 converts, into a format suitable for data communication, data supplied from the control section 87. Also, the communications section 86 sends the converted signal to the communications network 13. Furthermore, the communications section 86 converts a signal supplied from the communications network 13 into the original format, and sends the converted signal to the control section 87.

Being similar to the command storage section 24 shown in Fig. 1, the command storage section 88 stores various types of change instruction information.

The control section 87 performs overall control of various types of arrangements in the command server 85. The functions of the control section 87 are realized in such a manner that, for instance, a program stored in a storage device such as a RAM and flash memory is executed by a CPU. In the present embodiment, in response to an instruction supplied from the mobile communications terminal 12 via the communications network 13 and the communications section 86, the control section 87 reads out the change instruction information from the command storage section 88, and sends the change instruction section to the mobile communications terminal 12 via the communications section 86 and the communications network 13.

In the meanwhile, a content server 91 supplies, to the mobile communications terminal 12, content instruction information that indicates which content is displayed on each display area. As shown in Fig. 29, the content server 91 includes a communications section 92, a control section 93, and a content storage section 94.

The communications section 92 converts data supplied from the control section 93 into a format suitable for data communication, and sends the converted signal to the communications network 13. Also, the communications section 92 converts a signal supplied from the communications network 13 into the original format, and sends the converted data to the control section 93.

Being similar to the content storage section 25 shown in Fig. 1, the content storage section 94 stores various types of the content instruction information. The content storage section 94 may store contents such as image data, audio data, and document data which are supplied to the mobile communications terminal 12.

The control section 93 performs overall control of various arrangements of the content server 91. The functions of the control section 93 are realized in such a manner that, for instance, a program stored in a storage device such as a RAM and flash memory is executed by a CPU. In the present embodiment, in response to an instruction supplied from the mobile communications terminal 12 via the communications network 13 and the communications section 92, the control section 93 reads out the content instruction information from the content storage section 94, and sends the content instruction information to the mobile communications terminal 12 via the communications section 92 and the communications network 13.

The display template server 11 shown in Fig. 29 is identical with the display template server 11 shown in Fig. 1, except that the template storage section 23, the content storage section 25, and the template synthesizing section 26 are not provided in the display template server 11 shown in Fig. 29.

The mobile communications terminal 12 shown in Fig. 29 is identical with the mobile communications terminal 12 shown in Fig. 2, except that, in the mobile communications terminal 12 shown in Fig. 29, the template storage section 95 (storage means) is further provided and the control section 31 further includes the template synthesizing section 96 (acquisition means, generation means).

Being similar to the template storage section 23 shown in Fig. 1, the template storage section 95 stores various types of original templates each including display area information specifying the display areas.

The template synthesizing section 96 acquires an original template from the template storage section 95, and gives an instruction to the display template server 11 so as to acquire change instruction information from the command storage section 24. Also, the template synthesizing section 96 gives an instruction to the content server 91 so as to acquire content instruction information from the content storage section 94. The template synthesizing section 96 then synthesizes the original template supplied from the template storage section 95 with the change instruction information supplied from the command storage section 24 and the content instruction information supplied from the content storage section 94. Consequently, the display template is acquired as a result of the synthesis.

In this manner, in the present embodiment, the mobile communications terminal 12 synthesizes the original template with the change instruction information and the content instruction information, so that the display template is generated. The synthesis of the template may be performed in the display template server 11, in the mobile communications terminal 12, or in another node.

In the present embodiment, the template storage section 95 of the mobile communications terminal 12 stores various types of original templates. Alternatively, as shown in Fig. 1, the template storage section 23 of the display template server 11 stores various types of original templates, and the mobile communications terminal 12 acquires a desirable original template from the display template server 11 and stores the template in the template storage section 95.

The display template may be generated in such a manner that, the mobile communications terminal 12 has a content storage section, the display template server 11 synthesizes an original template, which is acquired from the template storage section 23, with change instruction information acquired from the command storage section 24, sends the synthesized template to the mobile communications terminal 12, and the template synthesizing section 96 of the mobile communications terminal 12 further synthesizes the synthesized template supplied from the display template server 11 with content instruction information acquired from the content storage section.

### [Embodiment 14]

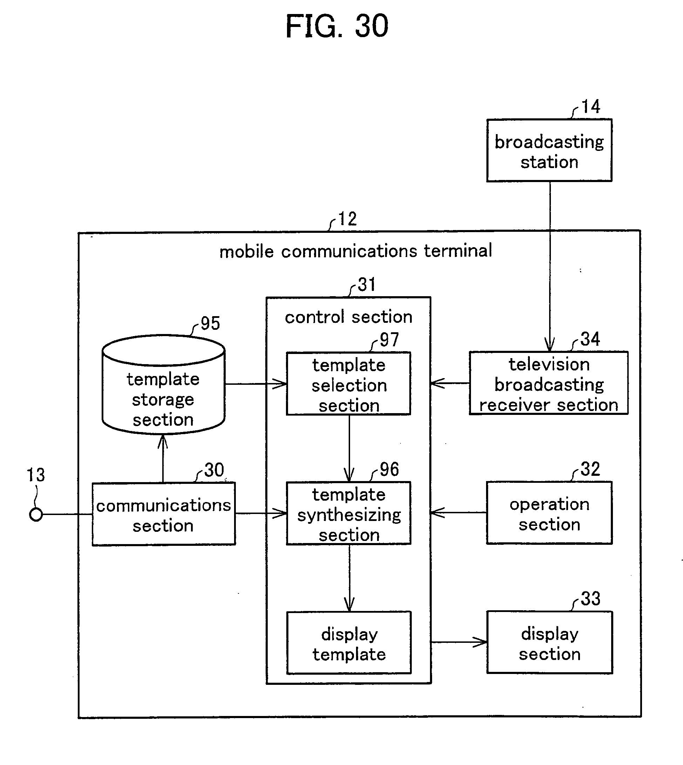

The following embodiment will describe yet another embodiment of the present invention in reference to Figs. 30-32. A communications network system of the present embodiment is different from the communications network system 90 shown in Fig. 29, in such a point that, in the communications network system of the present embodiment, the control section 31 of the mobile communications terminal 12 includes a template selection section (format change means) 97. Except this point, these communications network systems share the arrangements and processing. By the way, members having the same functions as those described in the embodiment above are given the same numbers, so that the descriptions are omitted for the sake of convenience.

Fig. 30 shows the outline of the mobile communications network 12 in the communications network system 90 of the present embodiment. As described above, this mobile communications terminal 12 is different from the mobile communications terminal 12 shown in Fig. 29, in such a point that the control section 31 further includes a template selection section 97.

The template selection section 97 selects one original template from a plurality of original templates stored in the template storage section 95, in response to the operation of the operation section 32. The template synthesizing section 96 of the present embodiment synthesizes the original template selected by the template selection section 97 with (i) change instruction information supplied from the command storage section 24 of the display template server 11 and (ii) content instruction information supplied from the content storage section 94 of the content server 91. The template as a result of the synthesis is used as a display template.

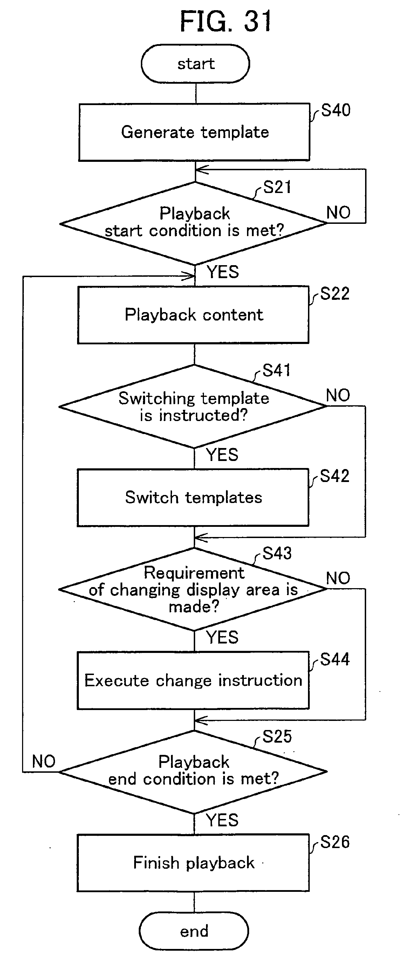

Fig. 31 shows processing in the control section 31 of the above-described mobile communications terminal 12. As shown in the figure, first, the template selection section 97 selects an original template, and the template synthesizing section 96 generates the display template (S40). Subsequently, the processing is on standby until a playback start condition of the content, which is included in the display template, is met (S21).

When the playback start condition is met, the control section 31 plays back the content and display the same on the display section 33 (S22). Thereafter, if the user operates the operation section 32 and instructs to switch the template, (YES in S41), the template selection section 97 selects an original template to be switched, the template synthesizing section 96 newly generates a display template, and consequently the display template is switched (S42). Then, if the control section 31 acquires a requirement of changing the display areas (YES in S43), the change in the display areas is performed (S44).

Subsequently, whether or not a playback end condition of the content is met is judged (S25). If the playback end condition is not met (NO in S25), the aforesaid steps are repeated from S22. If the playback end condition is met (YES in S25), the playback of the content finishes (S26). Subsequently, the processing in the mobile communications terminal 12 finishes.

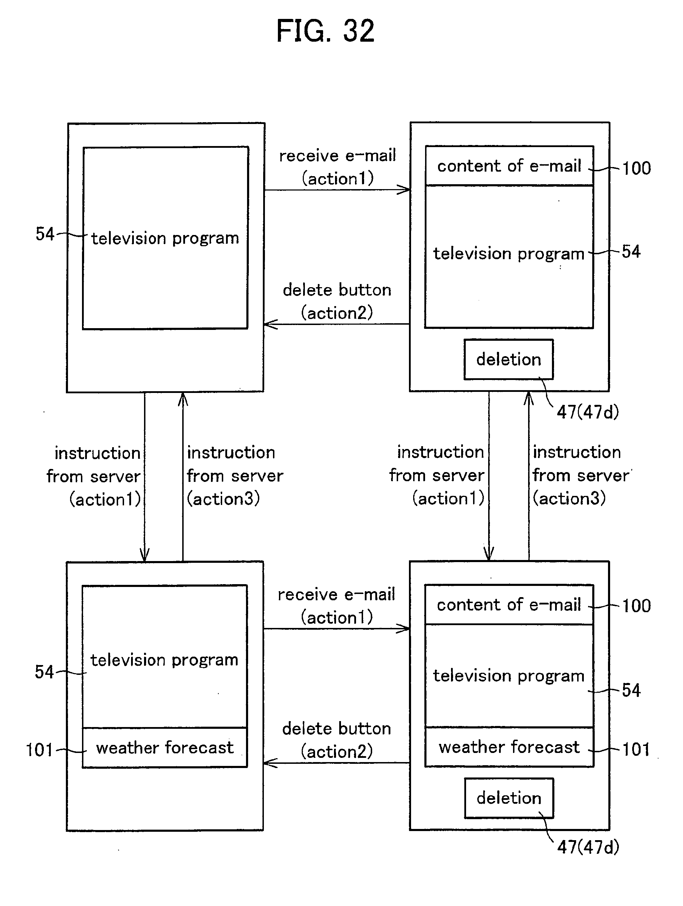

Fig. 32 shows an example of how images displayed on the display section 33 in line with the switched display template change. The display template shown in Fig. 32 is identical with the display template shown in Fig. 27, except that, in the display template shown in Fig. 32, a second display area 100 is provided in the upper part of the first display area 54, and a third display area 101 is provided in the lower part of the first display area 54.

Therefore, in the present embodiment, it is possible to change, for example, the display layout shown in Fig. 27 to the display layout shown in Fig. 32, in such a way that the template synthesizing section 96 switches the display template in response to the user's instruction. As a result, the display layout desired by the user is realized. Also, even if the mobile communications terminal 12 receives the same change instruction signal from the change instruction server 82, the display layout can be changed to a different one.

In the present embodiment, the template selection section 97 selects the original template in response to the operation of the operation section 32. Alternatively, the selection of the original template may be performed based on a predetermined change instruction signal supplied from an external device such as the display template server 11.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

For instance, the blocks in the server 11, the control section 21 in particular, and the blocks in the mobile communications terminal 12, the control section 31 in particular, may be realized by hardware logic. Alternatively, the blocks may be realized by software, with the use of a CPU as follows.

That is, each of the server 11 and the mobile communications terminal 12 may include members such as: a CPU that executes instructions of a control program realizing the functions; a ROM storing the program; a RAM on which the program is executed; and a storage device (storage medium) such as a memory, which stores the program and various kinds of data. The objective of the present invention may also be achieved in the following manner: program code (e.g. an executable code program, intermediate code program, and source program) of the control program of the server 11 and the mobile communications terminal 12, the control program being software for realizing the functions, is recorded on a storage medium in a computer-readable manner, this storage medium is supplied to the server 11 or the mobile communications terminal 12, and the computer (or CPU or MPU) reads out the program code from the storage medium and execute the program.

Examples of such a storage medium include a tape, such as a magnetic tape and a cassette tape; a magnetic disk, such as a flexible disk and a hard disk; a disc, such as a CD-ROM/MO/MD/DVD/CD-R; a card, such as an IC card (inclusive of a memory card); and a semiconductor memory, such as a mask ROM, an EPROM (erasable programmable read only memory), an EEPROM (electrically erasable programmable read only memory), or a flash ROM.

Alternatively, the server 11 and the mobile communications terminal 12 may be capable of being connected to a communications network, allowing the program code to be supplied via the communications network. Non-limiting examples of the communications network include the Internet, intranet, extranet, LAN, ISDN, VAN CATV network, virtual private network, telephone network, mobile communications network, and satellite communications network. Non-limiting examples of the transmission media composing the communications network are, wired media such as IEEE1394, USB, power line communication, cable TV lines, telephone lines, and ADSL lines, infrared light such as IrDA and remote controller, electric waves such as Bluetooth®, IEEE802.11, HDR, mobile telephone network, satellite connection, and terrestrial digital broadcasting network. It is also noted the present invention may be realized by a carrier wave or as data signal sequence, which are realized by electronic transmission of the program code.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### INDUSTRIAL APPLICABILITY

In the communications network system of the present invention, the information communications terminal is preferably adopted as a mobile communications terminal having a small display screen, such as a mobile phone, PDA, and note PC. Not limited to them, however, the present invention can be adopted to other types of information communications terminals, such as a desktop PC, network-connected display device, and television receiver.

## Claims

1. A display description format providing device supplying, to an information communications terminal, a display description format for displaying a plurality of contents on the information communications terminal, the display description format including: display area information for specifying a plurality of display areas ; change instruction information for making a change in the display areas; and content instruction information for determining which content is displayed on each of the display areas.

2. A display description format providing device generating a display description format for displaying a plurality of contents on the information communications terminal and supplying the display description format to an information communications terminal, the display description format including: display area information for specifying a plurality of display areas; change instruction information for making a change in the display areas; and content instruction information for determining which content is displayed on each of the display areas.

3. The display description format providing device as defined in claim 1 or 2, wherein, the change instruction information instructs at least two of the display areas to change.

4. The display description format providing device as defined in any one of claims 1-3, wherein, the change instruction information instructs at least one of the display areas to change at least twice.

5. The display description format providing device as defined in any one of claims 1-4, wherein, the change instruction information is at least one of: information that instructs at least one of the display areas to move; information that instructs at least one of the display areas to move to another information communications terminal; information that instructs two of the display areas to be switched with one another; information that instructs at least one of the display areas to appear; and information that instructs at least one of the display areas to disappear.

6. The display description format providing device as defined in any one of claims 1-5, wherein, the change instruction information includes at least one set of trigger information that triggers an instruction to make a change in the display areas.

7. The display description format providing device as defined in claim 6, wherein, said at least one set of trigger information instructs to make a change in the display areas, in at least one of cases where: the information communications terminal receives a predetermined input; the information communications terminal receives a predetermined change instruction signal; and predetermined application software runs on the information communications terminal.

8. A communications network system in which a plurality of information communications terminals are connected to the display description format providing device defined in any one of claims 1-7, via a communications network.

9. The communications network system as defined in claim 8, wherein, at least one of the information communications terminals ignores the change instruction information.

10. The communications network system as defined in claim 8, wherein, one of the contents is television pictures, and at least one of the information communications terminals is a mobile object capable of displaying the television pictures.

11. The communications network system as defined in claim 8, wherein, at least one of the information communications terminal is a display control device that controls a display device.

12. A display control device comprising:
acquisition means for acquiring a display description format that is used for displaying a plurality of contents and includes display area information that specifies a plurality of display areas, change instruction information that instructs to make a change in the display areas, and content instruction information that determines which content is displayed on each of the display areas; and
display control means for controlling a display device based on the acquired display description format.

13. A display control device comprising:
acquisition means for acquiring display area information that specifies a plurality of display areas, change instruction information that instructs to make a change in the display areas, and content instruction information that determines which content is displayed on each of the display areas;
generating means for generating a display description format that is used for displaying a plurality of contents and includes the display area information, the change instruction information, and the content instruction information which have been acquired; and
display control means for controlling a display device based on the generated display description format.

14. The display control device as defined in claim 12, further comprising format change means for replacing the display description format with another display description format.

15. A display system comprising the display control device as defined in any one of claims 12-14 and a display device controlled by the display control device.

16. A method of controlling a display description format providing device that generates a display description format for displaying a plurality of contents on an information communications terminal, and supplies the generated display description format to the information communications terminal,
the display description format providing device including storage means that stores: original description formats each including display area specifying information for specifying a plurality of display areas; and change instruction information for making a change in the display areas,
the method comprising the steps of:
in response to acquisition of content information from a content provider, selecting one of the original description formats stored in the storage means, the selected original description format corresponding to the acquired content information; and
synthesizing the selected original description format with the acquired content information, and further synthesizing, with the format having been synthesized with the content information, predetermined change instruction information acquired from the storage section.

17. A method of controlling a display description format providing device that supplies, to an information communications terminal, a display description format for displaying a plurality of contents on the information communications terminal,
the display description format including: display area information for specifying a plurality of display areas; change instruction information for making a change in the display areas; and content instruction information for determining which content is displayed on each of the display areas,
the method comprising the steps of:
sending, to the information communications terminal, the display description format including the change instruction information which determines which content is displayed on each of the display areas when the information communications terminal acquires a predetermined change instruction signal; and
sending the change instruction signal to the information communications terminal.

18. A method of controlling a display control device that controls a display device in accordance with a display description format for displaying a plurality of contents,
the display control device including storage means for storing more than one set of display area information that specifies a plurality of display areas,
the method comprising the steps of:
selecting one set of display area information from the storage means;
generating a display description format that includes the selected display area information, change instruction information that instructs to make a change in the display areas, and content instruction information that determines which content is displayed on each of the display area; and
controlling the display device based on the generated display description format.

19. A program for controlling a display description format providing device, causing a computer to execute the steps of the method defined in claim 16 or 17.

20. A program for controlling a display control device, causing a computer to execute the steps of the method defined in claim 18.

21. A computer-readable storage medium that stores the program defined in claim 19 and/or the program defined in claim 20.
